# EUROPÄISCHE PATENTANMELDUNG

(11) **EP 4 778 726 A2**
(43) Veröffentlichungstag der Anmeldung: **22.07.2026**
(21) Anmeldenummer: 26184160.5
(22) Anmeldetag: 14.01.2021
(51) Int. Cl.: B33Y 40/00

(54) **VERFAHREN ZUR TROCKENFILTRATION EINES FREMDKÖRPER MITFÜHRENDEN GASSTROMS, UND FILTERVORRICHTUNG ZUR REINIGUNG VON FREMDKÖRPER MITFÜHRENDEM ROHGAS**

(30) Priorität: 28.01.2020 DE 102020102036; 14.02.2020 DE 102020103982; 12.05.2020 DE 102020112861
(62) Teilanmeldung aus: 21702369.6
(71) Anmelder: Herding GmbH Filtertechnik, 92224 Amberg (DE)
(72) Erfinder: Herding, Walter, 92256 Hahnbach (DE); Herding, Dr. Urs, 92224 Amberg (DE); Dandorfer, Sebastian, 92224 Amberg (DE); Hajek, Stefan, 92224 Amberg (DE); Bethke, Dino, 92281 Königstein (DE); Rabenstein, Klaus, 92265 Edelsfeld (DE); Rösch, Maximilian, 92694 Etzenricht (DE); Sehr, Thomas, 92253 Schnaittenbach (DE); Weiß, Franz, 92277 Hohenburg (DE)
(74) Vertreter: Schmitt-Nilson Schraud Waibel Wohlfrom Patentanwälte Partnerschaft mbB

(57) **Zusammenfassung**

Die vorliegende Erfindung betrifft ein Verfahren und eine Filtervorrichtung zur Trockenfiltration eines Fremdkörper mitführenden Gasstroms, insbesondere in einer Filtervorrichtung zum Abreinigen von bei additiven Fertigungstechnologien entstehendem Abgas, aufweisend: Leiten eines Fremdkörper enthaltenden Rohgasstroms (44) in einen Rohgasraum (15) einer Filtereinheit (12), die wenigstens eine eine Rohgasseite von einer Reingasseite trennende Filteroberfläche aufweist, Zuführen von Oxidationsmittel zu einem Reaktionsbereich (24), der auf der Rohgasseite der Filteroberfläche stromabwärts von der Filteroberfläche liegt; derart, dass in von der Filteroberfläche abgereinigtem Material und/oder dem Rohgasstrom enthaltene Fremdkörper im Reaktionsbereich (24) mit dem Oxidationsmittel zur Bildung von oxidhaltigen Fremdkörpern reagieren, wobei der Reaktionsbereich (24) mit Unterdruck beaufschlagt wird. .

## Beschreibung

Die Erfindung betrifft ein Verfahren zur Trockenfiltration eines Fremdkörper mitführenden Gasstroms, sowie eine Filtervorrichtung zur Reinigung von Fremdkörper mitführendem Rohgas.

Bei der Reinigung von leicht entzündliche Fremdkörper mitführenden Gasen, wie sie beispielsweise bei Anlagen zur additiven Fertigung von Werkstücken aus Metall (z.B. beim Lasersintern von Werkstücken aus Titan- oder Aluminiumlegierungen) auftreten, besteht die Gefahr von unkontrollierten Bränden im Abgas. Diese Gefahr ist besonders groß, wenn solche leicht entzündlichen Fremdkörper an Filteroberflächen angelagert werden und sich dabei anreichern. Man hat versucht, diesen Gefahren durch Vorbeschichtung der Filteroberlächen mit inertisierenden Filtrationshilfsstoffen wie CaCo₃ oder Zugabe solcher Hilfsstoffe zu dem zu reinigenden Rohgas zu begegnen, ähnlich dem in der WO 2012/032003 A1 gezeigten Aufbau.

Aufgabe der Erfindung ist es, Rohgasbrände beim Filtern von entzündliche Fremdkörper enthaltenden Rohgasen, wie insbesondere beim Filtern von bei additiven Fertigungstechnologien entstehenden Abgasen, mittels eines Trockenfilters zu vermeiden bzw. zu unterdrücken.

Bei dem erfindungsgemäßen Verfahren zur Trockenfiltration eines Fremdkörper mitführenden Gasstroms, insbesondere in einer Filtervorrichtung zum Abreinigen von bei additiven Fertigungstechnologien entstehender Abluft bzw. Abgas, wird ein Fremdkörper enthaltender Rohgasstrom in einen Rohgasraum einer Filtereinheit zugeführt, die wenigstens eine eine Rohgasseite von einer Reingasseite trennende Filteroberfläche aufweist. Weiterhin wird ein Oxidationsmittel einem Reaktionsbereich zugeführt, der auf der Rohgasseite der Filteroberfläche stromabwärts von der Filteroberfläche liegt. Das Zuführen von Oxidationsmittel erfolgt derart, dass in von der Filteroberfläche abgereinigtem Material und/oder in dem Rohgasstrom enthaltene Fremdkörper im Reaktionsbereich mit dem Oxidationsmittel zur Bildung von oxidhaltigen Fremdkörpern reagieren.

Die vorliegende Erfindung schlägt ein Verfahren vor und stellt eine entsprechend ausgebildete Filtervorrichtung bereit, bei welchem gezielt eine spontane Oxidation von reaktiven oder sogar hochreaktiven Fremdkörpern in Abgasen, wie beispielsweise metallhaltigen Partikeln im Abrauch von Anlagen zur additiven Fertigung wie Lasersintern, herbeigeführt wird. Die hohe Reaktionsfähigkeit solcher Fremdkörper mit Oxidationsmitteln wie Sauerstoff oder Luft - eigentlich der Grund, warum die Trockenfiltration solcher Abgase problematisch ist - wird dabei gezielt zum Auslösen einer spontanen Reaktion der Fremdkörper mit Oxidationsmittel ausgenutzt. Überraschenderweise ist es möglich, diese spontane Reaktion durch geeignete Steuerung von Zufuhr und/oder Ableitung von Oxidationsmittel und ggf. weitere Maßnahmen gezielt einzuleiten und ihren Verlauf gut unter Kontrolle zu behalten, so dass eine unkontrollierte Reaktion der Fremdkörper mit dem Oxidationsmittel vermieden werden kann. Bei der hier vorgeschlagenen Vorgehensweise lässt sich die bei der Reaktion entstehende Wärme gut abführen, so dass keine unkontrollierbaren Brände oder Explosionen zu befürchten sind.

Ein Grundgedanke der vorliegenden Erfindung besteht darin, im Rohgas enthaltene Fremdkörper, die leicht brennbar sind, nicht zu inertisieren, sondern vielmehr dadurch unschädlich zu machen, dass gezielt eine Überführung dieser brennbaren Fremdkörper in eine oxidierte Konfiguration herbeigeführt wird. **In** der oxidierten Konfiguration sind diese Fremdkörper in der Regel reaktionsträge und nicht mehr brennbar, so dass der weitere Umgang mit diesen oxidierten Fremdkörpern keine besonderen Vorkehrungen mehr erfordert.

Allerdings muss dafür gesorgt werden, dass die spontane Oxidationsreaktion in kontrollierter Weise abläuft. Dies gelingt durch geeignete Zuführung von Oxidationsmittel zu einem vorbestimmten Reaktionsbereich, in dem sich von der Filteroberfläche abgereinigtes und damit fremdkörperhaltiges Material befindet, und/oder weitere Maßnahmen zum Abführen von Oxidationsmittel aus dem Reaktionsbereich. Es hat sich herausgestellt, dass sich der Ablauf der in der Regel stark exothermen Oxidationsreaktion gut kontrollieren lässt, wenn das Oxidationsmittel dem Reaktionsbereich nicht nur zugeführt wird, sondern vielmehr den Reaktionsbereich durchströmt. Das Oxidationsmittel wird dann dem Reaktionsbereich an einer ersten Stelle oder in einem ersten Bereich (Einlass) zugeführt und durchströmt den Reaktionsbereich, bis es an einer weiteren Stelle oder einem weiteren Bereich (Auslass) den Reaktionsbereich wieder verlässt, jedenfalls sofern es nicht beim Durchströmen des Reaktionsbereichs durch Reaktion mit fremdkörperhaltigem Material verbraucht worden ist. Man kann auf diese Weise gezielt einen Überschuss an Oxidationsmittel im Reaktionsbereich bereitstellen, wie er erforderlich ist, um die gewünschte Reaktion zur Bildung von oxidhaltigen Fremdkörpern spontan in Gang zu bringen bzw. in kontrolliertem Maße aufrecht zu erhalten. Die Durchströmung erlaubt eine genaue Steuerung des Ablaufs der Oxidationsreaktion. Diese läuft spontan, aber kontrolliert ab, sobald der Oxidationsmittelstrom einsetzt, und kann durch Einstellung der Stärke des Oxidationsmittelstroms, ggf. auch durch Einstellung der Zusammensetzung des Oxidationsmittelstroms, gut gesteuert werden.

Bei einer spontanen Oxidation verläuft die gewünschte Reaktion bzw. die gewünschten Reaktionen zur Bildung von oxidhaltigen Fremdkörpern im Wesentlichen ohne Bereitstellung von Aktivierungsenergie durch Energiezufuhr von einer Energiequelle, wie einer Zündquelle oder einer Wärmequelle. Die Oxidation kann bereits dadurch eingeleitet werden, dass Oxidationsmittel mit im Reaktionsbereich vorhandenem oder in den Reaktionsbereich eintretendem Material in Kontakt gelangt, das beim Abreinigen von der Filteroberfläche abfällt.

Das Oxidationsmittel kann Luft oder ein sauerstoffhaltiges Gas sein. Dem Oxidationsmittel können weitere Stoffe, beispielsweise inerte Gase wie Stickstoff oder Edelgase, zur Bildung eines Oxidationsmittelstroms beigemischt sein. Beispielsweise kann zur Bildung des Oxidationsmittelstroms Luft verwendet werden, oder ein an Sauerstoff abgereichertes Gemisch mit einem Sauerstoff-Anteil von 5 bis 21 Volumenprozent. Das Oxidationsmittel bzw. die Konzentration von Oxidationsmittel im Oxidationsmittelstrom wird ausreichend hoch gewählt, um eine spontane Reaktion von fremdkörperhaltigem Material in dem Reaktionsbereich zur Bildung von oxidhaltigen Fremdkörpern zu ermöglichen.

Durch die Formulierung "stromabwärts der Filteroberfläche auf der Rohgasseite der Filteroberfläche" soll zum Ausdruck gebracht werden, dass der Reaktionsbereich dem Rohgasraum bezogen auf den Transport von Fremdkörpern, die sich an der Filteroberfläche angelagert haben und von der Filteroberfläche bei einem Abreinigungszyklus (beispielsweise durch Beaufschlagen der Filteroberfläche mit einem Druckimpuls) abgereinigt worden sind, nachgelagert ist. Von der Filteroberfläche abgereinigtes Material wird somit zum Reaktionsbereich gefördert. Insbesondere soll der Reaktionsbereich von dem Rohgasraum getrennt sein, insbesondere dem Rohgasraum nachgelagert sein. Wenn das Oxidationsmittel erst dem nachgelagerten Reaktionsbereich, nicht aber dem Rohgasraum oder einem Bereich stromaufwärts des Rohgasraums, zugeführt wird, bleiben diese Bereiche frei von Oxidationsmittel, so dass durch die Oxidationsbehandlung des abgereinigten fremdkörperhaltigen Materials die Prozessumgebung, in der die eigentliche Filterung von Rohgas stattfindet, nicht durch Eintrag von Oxidationsmittel beeinflusst wird. Der Filterprozess bzw. der Arbeitsprozess, bei dem das zu filternde Abgas anfällt, kann insbesondere unter weitgehend inerten Bedingungen ablaufen und wird durch die Oxidationsbehandlung nicht gestört. Die Einhaltung einer inerten Umgebung im Rohgasraum kann zusätzlich dadurch sichergestellt werden, dass der Reaktionsbereich bei Zuführen von Oxidationsmittel von dem Rohgasraum temporär getrennt wird, insbesondere gasdicht getrennt wird.

Wie erläutert ist es günstig, wenn bei Reaktion von von der Filteroberfläche abgereinigtem Material mit dem Oxidationsmittel nicht verbrauchtes Oxidationsmittel aktiv aus dem Reaktionsbereich entfernt wird. Auf diese Weise kann ein geeigneter Überschuss an Oxidationsmittel bereitgestellt werden und so ein kontrollierter Ablauf der Oxidationsreaktion erreicht werden. Das bedeutet, es ist nicht unbedingt Ziel, nur Reaktionsprodukte, insbesondere bei der Reaktion gebildete oxidhaltige Fremdkörper und ggf. nicht oder nicht vollständig umgesetztes abgereinigtes Material, nach erfolgter mehr oder weniger vollständiger chemischer Umsetzung aus dem Reaktionsbereich zu entfernen. Vielmehr soll bereits während des Ablaufs der Oxidationsreaktion etwaiges nicht bei der Reaktion verbrauchtes Oxidationsmittel entfernt werden, in der Regel im selben Maß wie neues Oxidationsmittel nachgeliefert wird. Auf diese Weise kann die Oxidationsreaktion im Reaktionsbereich im Wesentlichen unter konstanten Umgebungsbedingungen, insbesondere unter einer konstanten Konzentration des Oxidationsmittels ablaufen.

Sobald ein ausreichender Anteil von fremdkörperhaltigem Material im Reaktionsbereichbereich, oder jedenfalls in einem zum Reaktionsbereich gehörenden Teilbereich, zu oxidhaltigen Fremdkörpern umgesetzt ist und/oder eine genügend große Menge an fremdkörperhaltigem Material aus dem Reaktionsbereichbereich, oder jedenfalls aus einem zum Reaktionsbereich gehörenden Teilbereich, entfernt worden ist, kann vorgesehen sein, dass die Oxidationsreaktion gestoppt wird, jedenfalls in dem zum Reaktionsbereich gehörenden Teilbereich. **In** diesem Fall wird die Zufuhr von weiterem Oxidationsmittel zum Reaktionsbereichbereich bzw. in den zum Reaktionsbereich gehörenden Teilbereich angehalten. Es werden dann in der Regel Reaktionsprodukte bzw. Reaktionsrückstände aus dem Reaktionsbereich bzw. dem zum Reaktionsbereich gehörenden Teilbereich entfernt. Häufig wird vorgesehen sein, dass im Wesentlichen alle Reaktionsprodukte bzw. Reaktionsrückstände aus dem Reaktionsbereich bzw. dem zum Reaktionsbereich gehörenden Teilbereich entfernt werden. Es kann auch genügen, nur einen Teil der Reaktionsprodukte bzw. Reaktionsrückstände zu entfernen. Der im Reaktionsbereich bzw. dem zum Reaktionsbereich gehörenden Teilbereich verbleibenden Reaktionsprodukte bzw. Reaktionsrückstände können nachfolgend zusammen mit neuem Material, das in den Reaktionsbereich bzw. in den zum Reaktionsbereich gehörenden Teilbereich gelangt, einer weiteren Oxidation unterzogen werden, ggf. nach Zugabe von weiterem Oxidationsmittel. Nach Entfernen des nach gestoppter bzw. erfolgter Umsetzung noch im Reaktionsbereich bzw. dem zum Reaktionsbereich gehörenden Teilbereich verbleibenden Oxidationsmittels kann der Reaktionsbereich bzw. der zum Reaktionsbereich gehörende Teilbereich in Fluidverbindung mit dem Rohgasraum gebracht werden, ohne dass Eintritt von Oxidationsmittel in den Rohgasraum zu befürchten wäre.

Insbesondere kann das Oxidationsmittel aus dem Reaktionsbereich bzw. dem zum Reaktionsbereich gehörenden Teilbereich abgesaugt werden. Hierzu kann der Reaktionsbereich mit einem Unterdruck beaufschlagbar sein, um noch im Reaktionsbereich vorhandenes Oxidationsmittel aus dem Reaktionsbereich abzusaugen. Es können auch Reaktionsprodukte und/oder andere Reaktionsrückstände durch Beaufschlagen des Reaktionsbereichs mit Unterdruck aus dem Reaktionsbereich abgesaugt werden. Das Beaufschlagen des Reaktionsbereichs mit Unterdruck kann während der und/oder im Anschluss an die Reaktion von von der Filteroberfläche abgereinigtem Material mit dem Oxidationsmittel erfolgen.

Zum Zuführen von Oxidationsmittel in den Reaktionsbereich bzw. in den zum Reaktionsbereich gehörenden Teilbereich kann ein Oxidationsmitteleinlass vorgesehen sein. Zum Entfernen von Oxidationsmittel aus dem Reaktionsbereich bzw. aus dem zum Reaktionsbereich gehörenden Teilbereich kann ein Oxidationsmittelauslass vorgesehen sein. Der Oxidationsmitteleinlass kann im einfachsten Fall auch zugleich als Oxidationsmittelauslass dienen. **In** der Regel wird aber vorgesehen sein, dass der Oxidationsmittelauslass von dem Oxidationsmitteleinlass verschieden ist, insbesondere so dass sich zwischen Oxidationsmitteleinlass und Oxidationsmittelauslass eine Oxidationsmittelströmung ausbildet, die einen möglichst großen Teil des Reaktionsbereichs bzw. des zum Reaktionsbereich gehörenden Teilbereichs durchquert.

Der Oxidationsmittelauslass kann ein speziell zum Abführen von Gas, insbesondere von Oxidationsmittel vorgesehener Auslass sein. Es ist aber auch möglich, dass nicht verbrauchtes Oxidationsmittel durch denselben Oxidationsmittelauslass abgeführt wird wie bei der Reaktion entstandene oxidhaltige Fremdkörper und ggf. noch nicht umgesetztes abgereinigtes Material. **In** diesem Fall ist der Oxidationsmittelauslass so ausgebildet, dass sowohl gasförmiges Material als auch festkörperhaltiges Material abgeführt werden kann.

Es ist denkbar, aber nicht unbedingt erforderlich, dass die gesamte Umsetzung von fremdkörperhaltigem Material mit Oxidationsmittel in einem Bereich stromaufwärts des Oxidationsmittelauslasses abläuft. Durch den Oxidationsmittelauslass abgeführtes Oxidationsmittel bzw. Gemisch aus Oxidationsmittel und weiterem (z.B. inertem) Fluid dient dann, abgesehen von einer möglichen Rückführung des Oxidationsmittelstroms zum Oxidationsmitteleinlass, nicht mehr zu weiterer Oxidierung. Es ist aber auch denkbar, dass der Reaktionsbereich stromabwärts des Oxidationsmittelauslasses liegende Bereiche umfasst, insbesondere stromabwärts des Oxidationsmittelauslasses liegende Leitungen, Fördereinrichtungen und/oder Behälter. Dies wird insbesondere dann zu erwägen sein, wenn nicht verbrauchtes Oxidationsmittel durch denselben Oxidationsmittelauslass abgeführt wird wie bei der Reaktion entstandene oxidhaltige Fremdkörper und ggf. noch nicht umgesetzte Fremdkörper.

In einer möglichen Ausgestaltung kann der Oxidationsmittelauslass an eine pneumatische Fördereinrichtung angeschlossen sein. Insbesondere kann diese pneumatische Fördereinrichtung eine als Feststoffinjektor oder Strahlpumpe arbeitende Fördereinrichtung sein. Alternative wäre ein Sauggebläse denkbar. Die pneumatische Fördereinrichtung kann mit Förderanschluss an den Oxidationsmittelauslass angeschlossen sein und somit einen Sogeffekt auf den Reaktionsbereich bzw. den Teilbereich des Reaktionsbereichs ausüben. Der Sogeffekt führt dazu, dass in den Reaktionsbereich bzw. in den Teilbereich des Reaktionsbereichs eingeleitetes Oxidationsmittel bzw. Gemisch aus Oxidationsmittel und weiterem (z.B. inertem) Fluid als Oxidationsmittelstrom zum Oxidationsmittelauslass hin strömt, dabei den Reaktionsbereich bzw. den Teilbereich des Reaktionsbereichs durchquert und das Oxidationsmittel mit fremdkörperhaltigem Material zur Bildung von oxidhaltigen Fremdkörpern reagiert.

Auch bei der Reaktion entstandene oxidhaltige Fremdkörper und ggf. noch nicht umgesetzte Fremdkörper können über eine pneumatische Fördereinrichtung, insbesondere eine als Feststoffinjektor oder Strahlpumpe arbeitende Fördereinrichtung, abgeführt werden. Die pneumatische Fördereinrichtung kann auch zum Weitertransport von solchem festkörperhaltigen Material dienen, etwa durch Leitungen bis zu einem Sammelbehälter oder Entsorgungsbehälter. Das geförderte festkörperhaltige Material kann oxidhaltige Fremdkörper, die aus der Reaktion mit Oxidationsmittel entstanden sind, oder noch nicht umgesetztes abgereinigtes Material enthalten. Diese pneumatische Fördereinrichtung kann speziell zum Abzug von festkörperhaltigem Material aus dem Reaktionsbereich bzw. dem Teilbereich des Reaktionsbereichs vorgesehen sein. Es ist aber auch denkbar, dass die pneumatische Fördereinrichtung sowohl zum Abzug von festkörperhaltigem Material aus dem Reaktionsbereich bzw. dem Teilbereich des Reaktionsbereichs als auch zum Abzug von gasförmigem Material aus dem Reaktionsbereich bzw. aus dem Teilbereich des Reaktionsbereichs und/oder zur Zugabe von Oxidationsmittel zu dem geförderten feststoffhaltigen Material vorgesehen ist. Beispielsweise kann bei einem Feststoffinjektor ein oxidationsmittelhaltiges Fluid wie etwa Luft oder ein sauerstoffhaltiges Gasgemisch als Förderfluid eingesetzt werden. Auf diese Weise bewirkt die Durchmischung von Förderfluid und gefördertem festkörperhaltigem Material einen effizienten Ablauf der gewünschten Oxidationsreaktion wenn das Gemisch durch stromabwärts liegende Bereiche des Feststoffinjektors der Förderleitung transportiert wird.

Durch Ansteuerung der pneumatischen Fördereinrichtung kann die Sogstärke eingestellt werden, die auf Material im Reaktionsbereich bzw. in dem Teilbereich des Reaktionsbereichs einwirkt. Bei geringerer Sogstärke wird (jedenfalls im Wesentlichen) ausschließlich gasförmiges Material aus dem Reaktionsbereich bzw. dem Teilbereich des Reaktionsbereichs abgezogen, so dass die mit dem Förderanschluss der pneumatischen Fördereinrichtung verbunden Öffnung (Sogöffnung) einen Oxidationsmittelauslass bildet. Bei stärkerer Sogstärke wird sowohl festkörperhaltiges Material als auch gasförmiges Material aus dem Reaktionsbereich bzw. aus dem Teilbereich des Reaktionsbereichs abgezogen. **In** diesem Fall bildet die Sogöffnung einen Auslass zum Weitertransport von festkörperhaltigem Material im Reaktionsbereich bzw. im Teilbereich des Reaktionsbereichs und gleichzeitig einen Oxidationsmittelauslass und/oder eine Anordnung zum Zuführen von Oxidationsmittel zu dem weitertransportierten festkörperhaltigen Material. Letzteres beispielsweise durch Vermischung von oxidationsmittelhaltigem Förderfluid und festkörperhaltigem Material in einem Feststoffinjektor.

Der Reaktionsbereich bzw. der Teilbereich des Reaktionsbereichs kann weiterhin mit einem inerten Fluid, insbesondere mit Inertgas, beaufschlagt werden. Durch Beimischung eines Inertgases kann beispielsweise die Konzentration von Oxidationsmittel im Oxidationsmittelstrom geeignet eingestellt werden und ggf. der Ablauf der Oxidationsreaktion beschleunigt oder verlangsamt werden. Beaufschlagung des Reaktionsbereichs bzw. des Teilbereich des Reaktionsbereichs mit einem inerten Fluid ohne Oxidationsmittel kann beispielsweise dazu dienen, den weiteren Ablauf der Reaktion von abgereinigtem Material mit Oxidationsmittel im Reaktionsbereich bzw. im Teilbereich des Reaktionsbereichs zu stoppen. Das inerte Fluid kann auch dazu dienen, im Reaktionsbereich bzw. im Teilbereich des Reaktionsbereichs noch verbleibendes Oxidationsmittel auszutreiben, um eine ausreichend inerte Atmosphäre im Reaktionsbereich bzw. im Teilbereich des Reaktionsbereichs herzustellen, die es erlaubt, einen Fluidkontakt zwischen dem Reaktionsbereich bzw. dem Teilbereich des Reaktionsbereichs und dem Rohgasraum herzustellen. Ein Stoppen der Reaktion kann beispielsweise nach Umsetzen einer bestimmten Menge von abgereinigtem Material mit Oxidationsmittel bzw. Umsetzen eines bestimmten Anteils von abgereinigtem Material mit Oxidationsmittel vorgesehen sein.

Beispielsweise kann vorgesehen sein, dass die Reaktion von von der Filteroberfläche abgereinigtem Material mit dem Oxidationsmittel in Reaktionsphasen verläuft, wobei ein Beaufschlagen des Reaktionsbereichs bzw. des Teilbereichs des Reaktionsbereichs mit Oxidationsmittel während der jeweiligen Reaktionsphasen stattfindet und im Anschluss an eine jeweilige Reaktionsphase der Reaktionsbereich bzw. der Teilbereich des Reaktionsbereichs mit inertem Fluid ohne Zugabe von Oxidationsmittel beaufschlagt wird. Auf diese Weise lässt sich der Ablauf der Reaktion sehr kontrolliert steuern, weil die Reaktion nach Abschalten der Oxidationsmittelzufuhr zum Erliegen kommen wird und dann im Reaktionsbereich bzw. im Teilbereich des Reaktionsbereichs befindliches Material, festkörperhaltig wie gasförmig, ganz oder zum Teil aus dem Reaktionsbereich bzw. aus dem Teilbereich des Reaktionsbereichs abgezogen werden kann. Durch begleitendes Spülen des Reaktionsbereichs bzw. des Teilbereichs des Reaktionsbereichs mit inertem Fluid lässt sich nachfolgend die Konzentration an Oxidationsmittel so weit absenken, dass ein Fluidkontakt zwischen Reaktionsbereich bzw. dem Teilbereich des Reaktionsbereichs und Rohgasraum wieder möglich wird ohne Gefahr von Eindringen von Oxidationsmittel in den Rohgasraum. Der Reaktionsbereich bzw. der Teilbereich des Reaktionsbereichs ist dann zur Aufnahme einer weiteren Charge von von der Filteroberfläche abgereinigtem Material bereit.

Einleitung von inertem Gas in den Reaktionsbereich bzw. in den Teilbereich des Reaktionsbereichs kann beispielsweise auf einfache Weise über eine Spülanschluss eines Feststoffinjektors erfolgen, der mit inertem Fluid beaufschlagt wird.

Zur Unterstützung der beschriebenen Maßnahmen kann vorgesehen sein, dass inertes Fluid über einen von dem Oxidationsmitteleinlass verschiedenen weiteren Fluideinlass in den Reaktionsbereich bzw. in den Teilbereich des Reaktionsbereichs geleitet wird. Beispielsweise kann ein solcher weiterer Fluideinlass in der Nähe einer Öffnung vorgesehen sein, die den Reaktionsbereich bzw. den Teilbereich des Reaktionsbereichs mit dem Rohgasraum verbindet, um gezielt Oxidationsmittel aus einer Umgebung dieser Öffnung auszuspülen. Es ist auch denkbar, mehrere solcher weiterer Fluideinlässe vorzusehen.

Es kann auch günstig sein, wenn inertes Fluid und/oder Oxidationsmittel durch einen oder mehrere neben dem Oxidationsmittelauslass vorgesehenen weiteren Auslass aus dem Reaktionsbereich bzw. aus dem Teilbereich des Reaktionsbereichs abgeführt wird. Beispielsweise kann vorgesehen sein, mehrere Oxidationsmittelauslässe über ein den Reaktionsbereich bzw. den Teilbereich des Reaktionsbereichs umgebendes Gehäuse verteilt anzuordnen, so dass sich im Reaktionsbereich bzw. im Teilbereich des Reaktionsbereichs eine breit verteilte und das Volumen des Reaktionsbereichs gut abdeckende Oxidationsmittelströmung ergibt. Auch eine gezielte Anordnung von einem der mehreren Auslässe für inertes Fluid in Bezug auf jeweils zugeordnete Einlassöffnungen für inertes Fluid kann vorgesehen sein, um bestimmte Bereiche des Reaktionsbereichs bzw. des Teilbereichs des Reaktionsbereichs besonders effizient von Oxidationsmittel auszuspülen.

Das Beaufschlagen des Reaktionsbereichs bzw. des Teilbereichs des Reaktionsbereichs mit inertem Fluid kann bereits einsetzen, während die Reaktion von von der Filteroberfläche abgereinigtem Material mit dem Oxidationsmittel abläuft. Das inerte Fluid kann dann insbesondere auch zum Abtransport von Wärme dienen. Dies wird beispielsweise häufig der Fall sein, wenn der Oxidatiosmittelstrom ein Gemisch aus Oxidationsmittel (z.B. Sauerstoff) und einem inerten Gas (z.B. Stickstoff) mit nur geringem Anteil an Oxidationsmittel ist.

Der Reaktionsbereich bzw. der Teilbereich des Reaktionsbereichs kann von einem Wärmeübertragungsfluid zum Abtransport von bei der Reaktion von von der Filteroberfläche abgereinigtem Material mit dem Oxidationsmittel entstehender Wärme durchströmt werden. Gegebenenfalls kann ein Strom des Wärmeübertragungsfluids gemeinsam mit dem Oxidationsmittelstrom den Reaktionsbereich bzw. den Teilbereich des Reaktionsbereichs durchströmen. Es kann auch das Oxidationsmittel selbst als Wärmeübertragungsfluid dienen, insbesondere bei nur teilweiser Umsetzung des Oxidationsmittels, weil das Oxidationsmittel mit Überschuss zugegeben wird, um die Reaktion zu beschleunigen. Das Wärmeübertragungsfluid kann auch als inertes Fluid zum Ausspülen von nach erfolgter Reaktion noch vorhandenem Oxidationsmittel aus dem Reaktionsbereich bzw. aus dem Teilbereich des Reaktionsbereichs dienen. Dann kann es günstig sein, als Wärmeübertragungsfluid ein inertes Fluid ohne Zugabe von Oxidationsmittel zu verwenden.

Der Reaktionsbereich kann einen Agglomerat-Auffangbereich enthalten, der zur Aufnahme von von der Filteroberfläche abgereinigtem Material ausgebildet ist, wobei an der Filteroberfläche angelagerte Fremdkörper oder fremdkörperhaltige Agglomerate abgereinigt werden und in dem Agglomerat-Auffangbereich aufgefangen und vorgehalten werden. Der Agglomerat-Auffangbereich bildet dann insbesondere den oben angesprochenen Teilbereich des Reaktionsbereichs. Der Agglomerat-Auffangbereich kann so ausgebildet sein, dass das von der Filteroberfläche abgereinigte Material direkt vom Rohgasraum in den Agglomerat-Auffangbereich fällt, ohne vorab an einer Position zwischen dem Filterelement und dem Agglomerat-Auffangbereich (beispielsweise in einem Bodenbereich eines den Rohgasraum umgebenden Filtergehäuses) gesammelt zu werden.

Dem Agglomerat-Auffangbereich kann eine ein erstes Absperrorgan aufweisende erste Verschlusseinrichtung zugeordnet sein. Die erste Verschlusseinrichtung kann derart ausgebildet sein, dass sie ein Auffangen, insbesondere ein nur kurzfristiges Auffangen von von der Filteroberfläche bei einer Abreinigung herabfallendem Material im Agglomerat-Auffangbereich ermöglicht und nach Aufnahme des abgereinigten Materials im Agglomerat-Auffangbereich den Reaktionsbereich gegenüber dem Rohgasraum jedenfalls so lange absperrt (insbesondere gasdicht absperrt), bis die Konzentration von Oxidationsmittel im Reaktionsbereich in ausreichendem Maße abgefallen ist.

In ausreichendem Maße abgefallen bedeutet insbesondere, bis man annehmen kann, dass die Konzentration von Oxidationsmittel im Reaktionsbereich unter einen vorbestimmten Schwellenwert abgefallen ist. Das kann der Fall sein, wenn die Reaktion zur Bildung von oxidhaltigen Fremdkörpern so vollständig erfolgt ist, dass das Oxidationsmittel weitgehend verbraucht worden ist und/oder alles Material aus dem Reaktionsbereich bzw. dem Agglomerat-Auffangbereich entfernt worden ist. Vom Erreichen dieses Zustands kann man in der Praxis durch Abwarten einer vorbestimmten Zeit seit Ingangsetzen der Oxidationsreaktion ausgehen, sofern die Geschwindigkeit, mit der die Reaktion abläuft, ausreichend gut bekannt ist (beispielsweise aus Tests). Im Allgemeinen wird dieser Zustand aber jedenfalls dann erreicht werden, wenn das Oxidationsmittel nach erfolgter Reaktion aus dem Reaktionsbereich bzw. dem Agglomerat-Auffangbereich entfernt worden ist, insbesondere durch Absaugen und/oder Austreiben mittels inertem Fluid.

Das erste Absperrorgan kann insbesondere so ausgebildet sein, dass die Aufnahme von von der Filteroberfläche abgereinigtem Material im Agglomerat-Auffangbereich bei geöffnetem erstem Absperrorgan jedenfalls nicht nennenswert behindert wird. Insbesondere soll das erste Absperrorgan während einer Abreinigung des Filterelements und/oder unmittelbar im Anschluss an eine Abreinigung des Filterelements geöffnet sein und jedenfalls so lange geöffnet bleiben, bis das bei der Abreinigung von der Filteroberfläche auf der Rohgasseite abfallende Material sich im Wesentlichen im Agglomerat-Auffangbereich gesammelt hat. Insbesondere kann das erste Absperrorgan nach Ablauf der Reaktion zur Bildung von oxidhaltigen Fremdkörpern im Reaktionsbereich wieder geöffnet sein, sobald die Konzentration von Oxidationsmittel im Reaktionsbereich in ausreichendem Maße abgefallen ist und nicht mehr zu befürchten ist, dass Oxidationsmittel in so großem Maß aus dem Reaktionsbereich in den Rohgasraum gelangt, dass die dort herrschenden Prozessbedingungen gestört werden.

Das von der Filteroberfläche abgereinigte Material kann vom Agglomerat-Auffangbereich in einen nachgelagerten Austragbereich gefördert werden. Der Austragbereich kann dem Reaktionsbereich in dem Sinn nachgelagert sein, dass im Austragbereich selbst keine Oxidation von Fremdkörpern mehr stattfindet. Es ist aber denkbar, und durchaus bevorzugt, dass der Reaktionsbereich noch den Austragbereich wenigstens zum Teil umfasst und im Austragbereich je nach Vorhandensein von Oxidationsmittel noch Fremdkörper oxidiert werden. Das Oxidationsmittel kann in solchen Fällen nicht nur dem Agglomerat-Auffangbereich, sondern auch oder sogar ausschließlich dem Austragbereich zugeführt werden.

Der Austragbereich kann eine zweite Verschlusseinrichtung aufweisen, die ein Absperrorgan aufweist, das den Austragbereich gegenüber stromabwärts liegenden Teilen absperren kann, insbesondere gasdicht absperren kann. Diese zweite Verschlusseinrichtung ist nicht unbedingt erforderlich, vor allem dann nicht, wenn eine weitgehend vollständige Umsetzung von brennbaren Fremdkörpern zu oxidhaltigen Fremdkörpern angestrebt wird, bevor das in den Austragbereich gebrachte Material das stromabwärts liegende Ende des Austragbrereichs erreicht. Ohne zweite Verchlusseinrichtung, bzw. bei geöffneter zweiter Verschlusseinrichtung kann die gewünschte Oxidationsreaktion im Austragbereich sehr effizient ablaufen bei schnellen Weitertransport von gefördertem Material. Wenn eine zweite Verschlusseinrichtung vorgesehen ist, kann das zugehörige Absperrorgan so ausgebildet sein, dass in seiner Verschlussstellung eine gasdichte Sperre bildet. Jedoch ist diese Eigenschaft ebenfalls nicht unbedingt erforderlich, in vielen Fällen wird eine bloße Absperrfunkktion gegenüber Partikeln ab einer bestimmten Größe genügen. Insbesondere kann der Reaktionsbereich zwischen der ersten Verschlusseinrichtung und der zweiten Verschlusseinrichtung liegen. Der Austragbereich kann außerdem einen Sammelbehälter umfassen. **In** dem Sammelbehälter kann festkörperhaltiges Material, insbesondere oxidhaltige Produkte aus der Oxidation von von der Filteroberfläche abgereinigtem Material, gesammelt und schließlich entsorgt werden.

Es kann sinnvoll sein, im Reaktionsbereich nicht verbrauchtes Oxidationsmittel und ggf. weiteres Fluid, welches nach Verlassen des Reaktionsbereichs, insbesondere bei Erreichen eines stromabwärts liegenden Bereichs des Austragbereichs, als überschüssiges Fluid oder Abfluid (insbesondere als Abgas im Falle von gasförmigem Fluid) anfällt, ganz oder zum Teil in den Reaktionsbereich zurückzuführen. Beispielsweise kann dem Sammelbehälter ein Abfluidauslass bzw. Abgasauslass zugeordnet sein und der aus dem Abfluidauslass austretende Fluidstrom ganz oder zum Teil in den Reaktionsbereich zurückgeführt werden. Durch eine Fluidrückführung der hier angesprochenen Art kann insbesondere die Menge an verbrauchtem Fluid, sei es als Oxidationsmittel, Wärmeübertragungsfluid, Spülfluid und/oder Förderfluid, deutlich begrenzt werden. Insbesondere inertes Fluid wird in der Regel bei Transport durch den Reaktionsbereich nicht verbraucht und kann praktisch unbegrenzt in einem auf diese Weise geschaffenen Kreislauf gehalten werden. Ggf. kann dem rückgeführten Fluidstrom frisches Oxidationsmittel zugeführt werden, um einen Verbrauch an Oxidationsmittel im Reaktionsbereich zu kompensieren.

Bei Vorsehen einer Rückführung von Fluid kann insbesondere eine Steuerung/Regelung vorgesehen sein, die derart eingerichtet ist, dass ein Fluiddruck innerhalb des Kreislaufs, insbesondere innerhalb des Reaktionsbereichs, einen vorbestimmten Wert nicht überschreitet und/oder nicht unterschreitet, insbesondere innerhalb eines vorbestimmten Bereichs bleibt. Als Stellgröße zur Regelung des Fluiddrucks kann beispielsweise vorgesehen sein, dass nur ein Teil des als Abfluid anfallenden Fluidstroms zum Reaktionsbereich zurückgeführt wird und ein weiterer Teil in die Umgebung oder an ein externes Abfluidentsorgungssystem abgegeben wird, wobei der rückgeführte Fluidstrom immer so eingestellt wird, dass ein Fluiddruck in dem Kreislauf, insbesondere im Reaktionsbereich, konstant bleibt, insbesondere einen vorbestimmten Wert nicht überschreitet und/oder einen anderen vorbestimmten Wert nicht unterschreitet, insbesondere innerhalb eines vorbestimmten Bereichs bleibt.

**Im** Reaktionsbereich kann ein Förderorgan zum Transport von von der Filteroberfläche abgereinigtem Material vorgesehen sein. Das Förderorgan kann vorzugsweise ein Förderfluid sein. Beispielsweise kann bei Vorsehen eines Feststoffinjektors zum Abtransport von Material aus dem Agglomerat-Auffangbehälter in eine Austragleitung das zur Erzeugung eines Unterdrucks an einem Förderanschluss des Feststoffinjektors dienende Fluid als Förderfluid zum Weitertransport von aus dem Agglomerat-Auffangbehälter gefördertem Material stromabwärts des Feststoffinjektors dienen. Mit dem Förderorgan kann ein schneller und effektiver Weitertransport von festkörperhaltigem Material erfolgen. Zudem kann ein Förderorgan eine Durchmischung bzw. Auflockerung von festkörperhaltigem Material verbessern, so dass dieses Material leichter in Kontakt mit Oxidationsmittel gelangt. Alternativ oder zusätzlich könnte das Förderorgan auch eine Förderschnecke, eine Zellenradschleuse, ein Gefälle und/oder eine Fluidisiereinrichtung aufweisen. Das Förderorgan kann insbesondere so ausgebildet sein, dass eine Transportrichtung von von der Filteroberfläche abgereinigtem Material umkehrbar ist.

Weitere Ausführungsformen des oben beschriebenen Verfahrens sowie der nachfolgend noch näher beschriebenen Filtervorrichtung werden nachfolgend bchrieben:
Der Reaktionsbereich kann einen Sammelbehälter umfassen. Es kann wenigstens ein Organ zum Bewegen von von der Filteroberfläche abgereinigtem Material im Sammelbehälter vorgesehen sein, insbesondere eine Förderschnecke, eine Fluidisiereinrichtung, eine Schwenkeinrichtung für den Sammelbehälter und/oder ein Mischer.

Der Reaktionsbereich kann temperierbar ausgebildet sein, insbesondere beheizbar und/oder kühlbar sein. Abweichend von dem oben Gesagten sind Ausgestaltungen denkbar, in denen dem Reaktionsbereich eine Zündeinrichtung und/oder Heizeinrichtung zugeordnet ist, um die Reaktion von Fremdkörpern mit dem Oxidationsmittel zu aktiv zu starten. Die Umsetzung von abgereinigtem Material zur Bildung von oxidhaltigen Fremdkörpern ist dann nicht vom Einsetzen einer spontanen Oxidation abhängig. **Im** Übrigen gelten die vorangehenden und nachfolgenden Ausführungen auch für diese alternative Ausgestaltung der vorliegenden Erfindung. Die Anmelderin behält sich vor, beispielsweise im Wege von Teilanmeldungen Ansprüche auf solche alternativen Ausgestaltungen zu richten.

Die Fremdkörper können beispielsweise Metalle enthalten oder Metalle sein und eine granulare, insbesondere spanartige, pulverförmige oder rauchförmige, Konfiguration aufweisen. Die Fremdkörper können insbesondere eine nicht vollständig oder sogar gar nicht oxidierte Konfiguration aufweisen. Insbesondere kann es sich bei den Fremdkörpern um Titanpulver oder Titanspäne handeln. Die Fremdkörper können nicht oder nicht vollständig oxidierte metallische Fremdkörper sein. Solche Fremdkörper entstehen z.B. bei der additiven Fertigung von metallischen Werkstücken, durch Verwendung von pulverförmigen metallischen Materialien beim schichtweisen Aufbau von Werkstücken aus einem Pulverbett. Typische Metalle, die bei solchen Verfahren eingesetzt werden und die zu brennbaren Fremdkörpern in der Abluft führen können, sind Titan, Aluminium, Magnesium und deren Legierungen, sowie viele Stähle wie Baustahl, Vergütungsstahl, hochlegierte Edelstähle.

Das Verfahren kann ferner den Verfahrensschritt aufweisen Filtrationshilfsstoff zu dem Rohgasstrom, der Filteroberfläche, dem Reaktionsbereich, und/oder dem Austragbereich zuzuführen. Der Filtrationshilfsstoff kann derart konfiguriert sein, dass er eine Reaktion von Fremdkörpern und/oder von der Filteroberfläche abgereinigtem Material mit Oxidationsmittel, insbesondere mit Sauerstoff, unterdrückt. Ggf. können den Abgasen brandhemmende Hilfsstoffe zugegeben sein, so dass sich Agglomerate aus Fremdkörpern und Filtrationshilfsstoffen bilden. Als besonderes geeignet zur Unterdrückung von Rohgasbränden bei additiven Fertigungsverfahren, in denen Titan und/oder Aluminium-Magnesium-Legierungen verwendet werden, hat sich die Zugabe eines Filtrationshilfsstoffes auf Basis von SiO₂ erwiesen. Bekannt ist etwa das Laser-Sinter-Verfahren als ein additives Fertigungsverfahren, bei dem Abgase entstehen, die zur Selbstentzündung neigen.

Der Filtrationshilfsstoff kann beispielsweise ein anorganisches Material sein, insbesondere kann ein auf Siliziumdioxid basierendes anorganisches Material oder ein auf Calciumcarbonat basierendes anorganisches Material als Filtrationshilfsstoff verwendet werden. Der Filtrationshilfsstoff kann insbesondere dazu dienen, sicherzustellen, dass die im Reaktionsbereich ablaufende Oxidation nicht außer Kontrolle gerät.

Der Filtrationshilfsstoff kann bei Zugabe eine granulare, insbesondere pulverförmige Konfiguration aufweisen. Dies erlaubt eine präzise Dosierung des Filtrationshilfsstoffs in den Rohgasstrom und/oder in die Filtervorrichtung, insbesondere zur Belegung von Filteroberflächen (Precoating). Außerdem ermöglicht ein entsprechender Filtrationshilfsstoff eine Verwendung eines einfachen Zuführmechanismus, wie einer Klappe oder einer Druckgaszufuhr. Je feinkörniger der Filtrationshilfsstoff bei Zugabe ist, desto effizienter ist die Bildung von zündhemmenden Agglomeraten.

Der Filtrationshilfsstoff kann derart konfiguriert sein, dass er metallhaltige Fremdkörper mit granularer Konfiguration in Agglomeraten bindet, insbesondere bei Temperaturen von 600 °C oder mehr, insbesondere bei Temperaturen von 650 °C oder mehr, insbesondere bei Temperaturen von 1220°C oder mehr, insbesondere bei Temperaturen von 750°C oder mehr, insbesondere bei Temperaturen von 1320°C oder mehr. Je nach Filtrationshilfsstoff können Temperaturen bis zu 1000°C, insbesondere bis zu 1250°C, insbesondere bis zu 1500°C, erreicht werden, ohne Bildung von Agglomeraten zu stark zu hemmen und/oder Zersetzung bzw. Zerfall von Agglomeraten in unerwünscht großem Umfang herbeizuführen. Die gebildeten Agglomerate sind in den genannten Temperaturbereichen nicht oder nur schwer entzündlich, so dass hierdurch eine höhere Betriebssicherheit gegenüber herkömmlichen Filtervorrichtungen möglich ist. Zahlreiche SiO₂-Gläser beginnen bei Temperaturen ab 600°C zu erweichen und können dann Agglomerate mit Fremdkörpern bilden. Je nach Konfiguration des SiO₂-Materials, z.B. durch Zugabe von Additiven oder Ausbildung als Glasschaum, kann die Temperatur, ab der eine Erweichung einsetzt, in geeigneter Weise variiert werden.

Die mit Filtrationshilfsstoff versetzten Agglomerate können bei starker Erwärmung in eine fließfähige Konfiguration übergehen, die einer Glasschmelze ähnelt, und nach Abkühlen unter den Glasübergangspunkt in eine glasartige Konfiguration übergehen. Die Filtrationshilfsstoffe schmelzen und schließen dabei die Fremdkörper in der Schmelze ein, so dass bereits in diesem Zustand eine Inertisierung erfolgt. Nach erfolgter Erstarrung der Schmelze bildet sich eine glasartige Konfiguration aus. Zur Ausbildung einer fließfähigen Konfiguration kann es insbesondere nach Erwärmung auf Temperaturen von 600°C oder mehr, insbesondere von 650°C oder mehr, insbesondere von 1220°C oder mehr, insbesondere von 750°C oder mehr, insbesondere von 1320°C oder mehr kommen. Dabei können die Agglomerate nach Abkühlen unter die Glasübergangstemperatur eine glasartige Konfiguration aufweisen. Dadurch kann ein Kontakt von Oxidationsmittel mit dem metallhaltigen Fremdkörper vermieden werden.

Der Filtrationshilfsstoff kann insbesondere ein Material sein, welches eine glasartige Konfiguration aufweist oder sich unter Einwirkung von Wärme in eine glasartige Konfiguration überführen lässt.

Materialien auf Basis von Siliziumdioxid mit glasartiger Konfiguration sind hergestellt aus einem Feststoff und haben eine amorphe oder wenigstens teilweise kristalline Struktur.

Solche Gläser weisen als Hauptbestandteil Siliziumdioxid auf und ihr Netzwerk ist hauptsächlich aus Siliziumdioxid gebildet. Dazu gehören insbesondere sogenannte SilikatGläser. Das silikatische Grundglas kann in Reinform vorhanden sein, zum Beispiel als Kieselglas. Auch Quarzglas ist denkbar, wenn höhere Erweichungstemperaturen erwünscht sind. Neben dem silikatischen Grundglas können noch zusätzliche Bestandteile vorhanden sein, beispielsweise Phosphat, Borat, u.ä.

Der Filtrationshilfsstoff kann als Hauptbestandteil wenigstens eines der folgenden Materialien aufweisen: Blähglaskugeln, Glasmehl, Siliziumdioxid-Partikel (SiO₂-Partikel), Quarzpulver oder eine Mischung wenigstens zweier dieser Materialien. Insbesondere sind gut geeignete Glasmaterialien solche, die aus recycletem Altglas (Recyclingglas) hergestellt sind, etwa Blähglas oder Schaumglas. Blähglas wird durch Vermahlen von Altglasscherben und Versetzen derselben mit Binde- und/oder Blähmitten hergestellt. Auf diese Weise entstehen in etwa runde Körner mit kleinen, gasgefüllten Poren. Blähglas kann in Körnungen von 0,04 - 16 mm produziert werden. Das Granulat besitzt eine geschlossene Porenstruktur. Schaumglas, insbesondere Schaumglas-Schotter, wird auf ähnliche Weise hergestellt. Blähglas oder Schaumglas lässt sich derart herstellen, dass die Untergrenze für die Temperatur, bei der der Erweichungsbereich beginnt, und/oder die Glasübergangstemperatur einen Wert zwischen 600°C und 750°C annimmt.

Im Brandfall erweichen bzw. schmelzen die zunächst gebildeten immer noch pulverartigen oder granularen Agglomerate aus Filtrationshilfsstoff und Metallpulver unter Einwirkung von Wärme. Die fließfähige Glasschmelze umgibt die metallhaltigen Fremdkörper und inertisiert diese. Nach Erstarren der Schmelze bildet sich eine glasartige Struktur aus, wobei metallhaltige Fremdkörper dauerhaft in dem Filtrationshilfsstoff eingeschlossen sind bzw. von dem Filtrationshilfsstoff umschlossen sind. Bereits mit Entstehen der fließfähigen Konfiguration werden die einzelnen selbstentzündlichen Partikel des Metalls durch den Filtrationshilfsstoff gebunden (verglast). Eine Reaktion mit Oxidationsmittel, insbesondere mit Sauerstoff (O₂), ist im verglasten Zustand nur schwer möglich oder gar nicht mehr möglich. Ein Verglasungsprozess der beschriebenen Art tritt insbesondere an solchen Stellen auf, an denen sich Filtrationshilfsstoff-Agglomerate ansammeln. Insbesondere kann ein Filterkuchen, der sich auf der Rohgasseite an einer Filteroberfläche ausgebildet hat und der ebenfalls ganz oder jedenfalls weitgehend aus Filtrationshilfsstoff-Agglomeraten besteht, bei Wärmeentwicklung (etwa im Falle eines Brandes), einen solchen Phasenübergang von einer pulverartigen oder granularen Konfiguration zu einer fließfähigen und schließlich glasartigen Konfiguration zeigen. Auch an Schüttkegeloberflächen, die sich in einem Agglomerat-Auffangbereich während des Betriebs gebildet haben, kann ein solcher Verglasungsprozess stattfinden und zu einer effizienten Inertisierung des in dem Agglomerat-Auffangbereich gelagerten Materials führen. Diesen Verglasungsprozess kann man dadurch unterstützen, dass man von Zeit zu Zeit die Oberfläche des sich in dem Agglomerat-Auffangbereich bildenden Schüttgutkegels mit einer Schicht aus Filtrationshilfsstoff belegt.

Die gebildeten Agglomerate können im Brandfall, also unter Anwesenheit eines Oxidationsmittels (normalerweise Sauerstoff), bei Temperaturen von bis zu 650°C chemisch stabil bleiben, insbesondere bei Temperaturen von bis zu 750°C, insbesondere bei Temperaturen von bis zu 850°C, insbesondere bei Temperaturen von bis zu 1000°C, insbesondere bei Temperaturen von bis zu 1250 C, insbesondere bei Temperaturen von bis zu 1500°C.

Der Filtrationshilfsstoff kann auch eine gasförmige Konfiguration aufweisen. In diesem Fall kann der Filtrationshilfsstoff auch als Wärmeübertragungsfluid verwendet werden, nachdem eine Oxidation der Fremdkörper und/oder des von der Filteroberfläche abgereinigten Materials erfolgt ist.

Beaufschlagen des Agglomerat-Auffangbereichs und/oder des Austragbereichs und/oder des Reaktionsbereichs mit Filtrationshilfsstoff und/oder Oxidationsmittel kann dann erfolgen, wenn eine Abreinigung der Filterelemente stattgefunden und sich im Agglomerat-Auffangbereich und/oder im Austragbereich und/oder im Reaktionsbereich das von der Filteroberfläche abgereinigte Material abgesetzt hat.

Beaufschlagen des Agglomerat-Auffangbereichs und/oder des Austragbereichs und/oder des Reaktionsbereichs mit dem Oxidationsmittel kann in zeitlichem Zusammenhang mit dem Beaufschlagen des Agglomerat-Auffangbereichs und/oder des Austragbereichs mit Filtrationshilfsstoff erfolgen, insbesondere dem Beaufschlagen des Agglomerat-Auffangbereichs und/oder des Austragbereichs und/oder des Reaktionsbereichs mit Filtrationshilfsstoff vorangehen, oder auf Beaufschlagen des Agglomerat-Auffangbereichs und/oder der Austragbereichs und/oder des Reaktionsbereichs mit Filtrationshilfsstoff folgen.

Eine erfindungsgemäße Filtervorrichtung zur Reinigung von Fremdkörper mitführendem Rohgas umfasst wenigstens ein Filterelement mit wenigstens einer Filteroberfläche in einem Rohgasraum, dem ein Fremdkörper enthaltender Rohgasstrom zuführbar ist. Ferner ist eine Oxidationsmittelzuführeinrichtung vorgesehen, die dazu ausgebildet ist, ein Oxidationsmittel zu einem Reaktionsbereich zu führen, der auf der Rohgasseite der Filteroberfläche stromabwärts von der Filteroberfläche liegt. Die Oxidationsmittelzuführeinrichtung ist derart ausgebildet, dass in von der Filteroberfläche abgereinigtem Material und/oder dem Rohgasstrom enthaltene Fremdkörper im Reaktionsbereich mit dem Oxidationsmittel zur Bildung von oxidhaltigen Fremdkörpern reagieren.

Die vorangehend mit Bezug auf das erfindungsgemäße Verfahren dargelegten Ausführungen gelten auch für die erfindungsgemäße Filtervorrichtung sinngemäß. Es wird zur Vermeidung von Wiederholungen ausdrücklich auf die vorgehenden Ausführungen verwiesen.

Insbesondere kann das Oxidationsmittel Luft oder ein sauerstoffhaltiges Gas sein. Insbesondere kann der Reaktionsbereich dem Rohgasraum nachgelagert sein. Insbesondere kann der Reaktionsbereich bei Zuführen des Oxidationsmittels gegenüber dem Rohgasraum absperrbar sein. Diese Maßnahmen tragen dazu bei, dass der Rohgasraum weitgehend frei von Oxidationsmittel bleibt.

Die Filtervorrichtung kann so ausgebildet sein, dass bei der Reaktion von von der Filteroberfläche abgereinigtem Material mit dem Oxidationsmittel nicht verbrauchtes Oxidationsmittel aus dem Reaktionsbereich entfernbar ist. Hierdurch kann eine besonders gute Kontrolle der im Reaktionsbereich ablaufenden Reaktion erreicht werden.

Die Filtervorrichtung kann einen Oxidationsmitteleinlass aufweisen, welcher dazu ausgebildet ist, Oxidationsmittel in den Reaktionsbereich bzw. in einen Teilbereich des Reaktionsbereichs zuzuführen, und einen Oxidationsmittelauslass aufweisen, welcher dazu ausgebildet ist, Oxidationsmittel aus dem Reaktionsbereich bzw. einem Teilbereich des Reaktionsbereichs abzuführen, wobei insbesondere der Oxidationsmittelauslass von dem Oxidationsmitteleinlass verschieden ist.

Die Filtervorrichtung kann zudem dazu ausgebildet sein, nicht verbrauchtes Oxidationsmittel durch denselben Oxidationsmittelauslass abzuführen, insbesondere abzusaugen, wie bei der Reaktion entstandene oxidhaltige Fremdkörper und ggf. noch nicht umgesetzte Fremdkörper.

Der Reaktionsbereich kann stromabwärts des Oxidationsmittelauslasses liegende Bereiche umfassen, insbesondere stromabwärts liegende Leitungen, Fördereinrichtungen und/oder Behälter.

Es ist besonders elegant, wenn der Oxidationsmittelauslass an eine pneumatische Fördereinrichtung angeschlossen ist, insbesondere an eine als Feststoffinjektor oder Strahlpumpe arbeitende Fördereinrichtung und/oder an ein Sauggebläse. Die Filtervorrichtung kann zudem eine pneumatische Fördereinrichtung aufweisen, insbesondere an eine als Feststoffinjektor oder Strahlpumpe arbeitende Fördereinrichtung, die zum Abführen von bei der Reaktion entstandenen oxidhaltigen Fremdkörpern und ggf. noch nicht umgesetzten Fremdkörpern vorgesehen ist. Diese pneumatische Fördereinrichtung kann auch zum Abführen von Oxidationsmittel oder anderen gasförmigen Stoffen aus dem Reaktionsbereich bzw. aus dem Teilbereich des Reaktionsbereichs dienen.

Die Filtervorrichtung kann dazu ausgebildet sein, den Reaktionsbereich bzw. den Teilbereich des Reaktionsbereichs mit Unterdruck zu beaufschlagen, insbesondere während der und/oder im Anschluss an die Reaktion von von der Filteroberfläche abgereinigtem Material mit dem Oxidationsmittel. Zusätzlich oder alternativ kann die Filtervorrichtung dazu ausgebildet sein, den Reaktionsbereich bzw. den Teilbereich des Reaktionsbereichs mit einem inerten Fluid, insbesondere mit Inertgas, zu beaufschlagen.

Die Filtervorrichtung kann ferner eine Steuerung aufweisen, welche derart eingerichtet ist, dass die Reaktion von von der Filteroberfläche abgereinigtem Material mit dem Oxidationsmittel in Reaktionsphasen stattfindet, wobei ein Baufschlagen des Reaktionsbereichs bzw. des Teilbereichs des Reaktionsbereichs mit Oxidationsmittel während der Reaktionsphasen vorgesehen ist und/oder eine Beaufschlagung des Reaktionsbereichs bzw. des Teilbereichs des Reaktionsbereichs mit inertem Fluid ohne Zugabe von Oxidationsmittel im Anschluss an eine jeweilige Reaktionsphase vorgesehen ist.

Die Filtervorrichtung kann einen von dem Oxidationsmitteleinlass verschiedenen weiteren Fluideinlass in den Reaktionsbereich bzw. in den Teilbereich des Reaktionsbereichs zur Einleitung von inertem Fluid aufweisen.

Die Filtervorrichtung kann einen neben dem Oxidationsmittelauslass vorgesehenen weiteren Auslass zum Abführen von inertem Fluid und/oder Oxidationsmittel aus dem Reaktionsbereich bzw. bzw. aus dem Teilbereich des Reaktionsbereichs aufweisen.

Der Reaktionsbereich bzw. der Teilbereich des Reaktionsbereichs kann jedenfalls nach erfolgter Reaktion von von der Filteroberfläche abgereinigtem Material mit dem Oxidationsmittel mit einem inerten Fluid, insbesondere mit Inertgas, beaufschlagt werden und/oder mit Unterdruck beaufschlagt werden. Das inerte Fluid verdrängt in dem Fall das Oxidationsmittel aus dem Reaktionsbereich bzw. aus dem Teilbereich des Reaktionsbereichs, so dass keine unkontrollierte Oxidation mehr stattfinden kann. Dieser Effekt kann auch durch Beaufschlagen des Reaktionsbereichs bzw. aus dem Teilbereich des Reaktionsbereichs mit Unterdruck erzielt werden, nämlich dass Oxidationsmittel aus dem Reaktionsbereich bzw. aus dem Teilbereich des Reaktionsbereichs abgesaugt wird. Beide Maßnahmen können auch kombiniert werden und sich dabei gegenseitig unterstützen.

Die Filtervorrichtung kann weiterhin einen Oxidationsmitteleinlass aufweisen über den Oxidationsmittel in den Reaktionsbereich bzw. in den Teilbereich des Reaktionsbereichs zuführbar ist. Der Oxidationsmitteleinlass kann mit einer Absperrvorrichtung versehen sein, um das Oxidationsmittel kontrolliert in den Reaktionsbereich bzw. in den Teilbereich des Reaktionsbereichs einzulassen. Die Filtervorrichtung kann auch einen, insbesondere von dem Oxidationsmitteleinlass verschiedenen, Auslass aufweisen, über den nach erfolgter Reaktion von von der Filteroberfläche abgereinigtem Material mit dem Oxidationsmittel noch im Reaktionsbereich bzw. im Teilbereich des Reaktionsbereichs vorhandenes Oxidationsmittel abgeführt werden kann.

Der Oxidationsmitteleinlass kann vorzugsweise in einem Kopfende des Reaktionsbereichs bzw. des Teilbereichs des Reaktionsbereichs angeordnet sein, wobei das Kopfende auf der dem Rohgasraum zugewandten Seite des Reaktionsbereichs bzw. des Teilbereichs des Reaktionsbereichs angeordnet ist. Der Auslass kann insbesondere am Fußende des Reaktionsbereichs bzw. des Teilbereichs des Reaktionsbereichs angeordnet sein, wobei das Fußende auf der dem Rohgasraum abgewandten Seite des Reaktionsbereichs bzw. des Teilbereichs des Reaktionsbereichs angeordnet ist. Diese Anordnung ermöglicht, dass dem Reaktionsbereich effizient und zuverlässig das Oxidationsmittel zugeführt werden kann, und auch, dass von der Filteroberfläche abgereinigtes Material aus dem Reaktionsbereich bzw. aus dem Teilbereich des Reaktionsbereichs zuverlässig mit einem Oxidationsmittelstrom durch den Auslass geleert werden kann.

An der Filtervorrichtung kann auch ein gemeinsamer Auslass vorgesehen sein, durch den Rückstände der Reaktion von von der Filteroberfläche abgereinigtem Material mit dem Oxidationsmittel, insbesondere gebildete oxidhaltige Fremdkörper, ganz oder teilweise nicht umgesetzte Stoffe und überschüssiges Oxidationsmittel aus dem Reaktionsbereich bzw. aus dem Teilbereich des Reaktionsbereichs entfernbar sind. Hierdurch ergibt sich ein einfacher Aufbau für die Filtervorrichtung und insbesondere für den Reaktionsbereich. Der Reaktionsbereich bzw. der Teilbereich des Reaktionsbereichs kann von einem Wärmeübertragungsfluid zum Abtransport von bei der Reaktion entstehender Wärme durchströmbar sein.

Der Reaktionsbereich kann auch einen Agglomerat-Auffangbereich enthalten, der zur Aufnahme von von der Filteroberfläche abgereinigtem Material ausgebildet ist, wobei an der Filteroberfläche angelagerte Fremdkörper oder fremdkörperhaltige Agglomerate nach Abreinigung derselben in dem Agglomerat-Auffangbereich auffangbar und vorhaltbar sind. Der Agglomerat-Auffangbehälter bildet insbesondere den angesprochenen Teilbereich des Reaktionsbereichs.

Dem Agglomerat-Auffangbereich kann eine ein erstes Absperrorgan aufweisende erste Verschlusseinrichtung zugeordnet sein, welche derart ausgebildet ist, dass sie ein Auffangen, insbesondere ein kurzzeitiges Auffangen von von der Filteroberfläche bei einer Abreinigung herabfallendem Material im Agglomerat-Auffangbereich ermöglicht und nach Aufnahme des abgereinigten Materials im Agglomerat-Auffangbereich den Reaktionsbereich gegenüber dem Rohgasraum jedenfalls so lange absperrt, bis die Konzentration von Oxidationsmittel im Reaktionsbereich in ausreichendem Maß abgefallen ist.

Die Filtervorrichtung kann weiterhin einen dem Agglomerat-Auffangbereich nachgelagerten Austragbereich aufweisen, in den von der Filteroberfläche abgereinigtes Material förderbar ist, wobei insbesondere der Reaktionsbereich wenigstens einen Teil des Austragbereichs umfasst, und insbesondere Oxidationsmittel dem Agglomerat-Auffangbereich und/oder dem Austragbereich zuführbar ist.

Der Austragbereich kann eine zweite Verschlusseinrichtung aufweisen, wobei insbesondere der Reaktionsbereich zwischen der ersten Verschlusseinrichtung und der zweiten Verschlusseinrichtung angeordnet ist.

Im Reaktionsbereich kann ein Förderorgan vorgesehen sein, das zum Transport von von der Filteroberfläche abgereinigtem Material ausgebildet ist, wobei das Förderorgan insbesondere ein Förderfluid umfasst. Beispielsweise kann bei Vorsehen eines Feststoffinjektors zum Abtransport von Material aus dem Agglomerat-Auffangbehälter in eine Austragleitung das zur Erzeugung eines Unterdrucks an einem Förderanschluss des Feststoffinjektors dienende Fluid als Förderfluid zum Weitertransport von aus dem Agglomerat-Auffangbehälter gefördertem Material stromabwärts des Feststoffinjektors dienen.

Bezüglich der Vorteile und Vorzüge der einzelnen Merkmale wird auf die Beschreibung des erfindungsgemäßen Verfahren und der weiteren Merkmale Bezug genommen.

Das Oxidationsmittel kann Luft oder ein sauerstoffhaltiges Gas sein, insbesondere mit einem Sauerstoff-Anteil von 1 bis 21 Volumenprozent. Das Oxidationsmittel ermöglicht eine spontane Reaktion von Fremdkörpern und/oder von der Filteroberfläche abgereinigtem Material in dem Reaktionsbereich. Der Reaktionsbereich kann dem Rohgasraum nachgelagert sein.

Die Filtervorrichtung kann eine Anordnung zum Zuführen eines Wärmeübertragungsfluids zu dem Reaktionsbereich und Abführen des Wärmeübertragungsfluids nach Durchströmen des Reaktionsbereichs bzw. des Teils des Reaktionsbereichs vorsehen, um die bei der Oxidation entstehende Wärme zusammen mit den oxidhaltigen Fremdkörpern und überschüssigem Oxidationsmittel abzuführen.

Im Reaktionsbereich kann ein Förderorgan zum Transport von von der Filteroberfläche abgereinigtem Material vorgesehen sein, insbesondere eine Förderschnecke, eine Zellenradschleuse, ein Gefälle und/oder eine Fluidisiereinrichtung. Das Förderorgan kann insbesondere so ausgebildet sein, dass eine Transportrichtung von von der Filteroberfläche abgereinigtem Material umkehrbar ist. Das Förderorgan kann insbesondere eine pneumatische Fördereinrichtung sein, beispielsweise ein Feststoffinjektor.

Der Austragbereich kann einen Abfluidauslassbereich aufweisen, über den nach Durchlauf durch den Prozess anfallendes fluides Material abgegeben werden kann. Wenn die hierin beschriebene oxidative Behandlung von von Filteroberflächen abgereinigtem Material mittels gasförmigem Fluid erfolgt, insbesondere mittels gasförmigem Oxidationsmittel, Wärmeübertragungsfluid, Spülfluid und/oder Förderfluid, wird am Abfluidauslassbereich vor allem gasförmiges Abfluid (Abgas) anfallen. In der vorliegenden Anmeldung werden vereinfachend auch die Begriffe Abgas bzw. Abgasauslassbereich verwendet, unabhängig davon, ob am Ende des Prozesses anfallendes Fluid überwiegend im gasförmigen oder flüssigen Zustand vorliegt. Der Abgasauslaussbereich kann eine Filtereinheit mit wenigstens einem Filterelement und einen Abgasauslass aufweisen. Der Abgasauslassbereich kann insbesondere eine Druckgasabreinigungsvorrichtung aufweisen. Die Druckgasabreinigungsvorrichtung kann dazu ausgebildet sein, das wenigstens eine Filterelement mit Druckimpulsen zu beaufschlagen. Alternativ kann die Filtereinheit wenigstens ein Filterelement mit Speicherfiltern aufweisen. Der Abgasauslassbereich kann so ausgebildet sein, dass ein Gemisch aus insbesondere bei der Reaktion gebildeten Rückständen und überschüssigem Oxidationsmittel in diesem gefiltert und durch den Abgasauslass aus der Filtervorrichtung abgeführt werden kann.

Die Filtervorrichtung kann insbesondere eine Fluidrückführung aufweisen, welche derart ausgebildet ist, dass im Reaktionsbereich nicht verbrauchtes Oxidationsmittel und ggf. weiteres Fluid, welches nach Verlassen des Reaktionsbereichs als Abfluid zw. Abgas anfällt, ganz oder zum Teil in den Reaktionsbereich zurückgeführt wird. Dabei kann insbesondere eine Steuerung/Regelung vorgesehen sein, die derart eingerichtet ist, dass ein Fluiddruck in dem so geschaffenen Kreislauf, insbesondere in dem Reaktionsbereich, einen vorbestimmten oberen Grenzwert nicht überschreitet und/oder einen vorbestimmten unteren Grenzwert nicht unterschreitet, insbesondere innerhalb eines vorbestimmten Bereichs bleibt.

Der Austragbereich kann einen Sammelbehälter für festkörperhaltiges Material umfassen, in dem festkörperhaltiges Material, insbesondere die oxidhaltigen Fremdkörper, gesammelt werden können. Sobald dieser gefüllt ist, kann der Sammelbehälter von einem Bediener entnommen und durch einen leeren Sammelbehälter ersetzt werden. Ein Unterbrechen der Filterung kann somit vermieden werden. Insbesondere kann der Austragbereich einen Sammelbehälter zum Abscheiden von festkörperhaltigem Material umfassen, wobei der Sammelbehälter einen Auslass für fluides, insbesondere gasförmiges Material, aufweist (Abgasauslass). **In** diesem Fall kann dem Auslass eine Filtereinheit zur Reinigung des fluiden Materials von Fremdkörpern der oben beschriebenen Art zugeordnet sein. Außerdem kann dem Auslass eine Fluidrückführung der oben beschriebenen Art zugeordnet sein.

Dem Reaktionsbereich bzw. dem Teil des Reaktionsbereichs können Anordnungen zur Temperierung, insbesondere zum Heizen und/oder Kühlen des Reaktionsbereichs bzw. des Teils des Reaktionsbereichs, zugeordnet sein. **In** alternativen Ausgestaltungen kann der Reaktionsbereich bzw. der Teil des Reaktionsbereichs eine Zündeinrichtung und/oder eine Heizeinrichtung aufweisen, um die Reaktion von Fremdkörpern mit dem Oxidationsmittel aktiv zu starten.

Die Filtervorrichtung kann ferner eine Filtrationshilfsstoffeintraganordnung mit einer in den Rohgasraum, in den Rohgasstrom stromaufwärts und/oder stromabwärts des Rohgasraums und/oder in den Reaktionsbereich und/oder in den Austragbereich, insbesondere in den Sammelbehälter mündenden Filtrationshilfsstoffzuführleitung zum Zuführen von Filtrationshilfsstoff aufweisen. Der Filtrationshilfsstoff kann dabei derart konfiguriert sein, dass er eine weitere Reaktion von Fremdkörpern mit Oxidationsmittel, insbesondere mit Sauerstoff, unterdrückt, sobald eine erste Oxidation des von der Filteroberfläche abgereinigten Materials stattgefunden hat.

Die Erfindung und besondere Ausgestaltungen der Erfindung werden nachfolgend an Hand von Ausführungsbeispielen näher erläutert.
Figur 1 zeigt in einer Seitenansicht eine erfindungsgemäße Filtervorrichtung.
Figur 2 zeigt die Filtervorrichtung aus Figur 1 in einer gegenüber der Ansicht aus Figur 1 um 90 Grad gedrehten Seitenansicht.
Figur 3 zeigt eine schematische Darstellung für eine Ausführungsform eines Reaktionsbereichs.
Figur 4 zeigt eine schematische Darstellung für eine weitere Ausführungsform eines Reaktionsbereichs.
Figur 5 zeigt eine schematische Darstellung für eine weitere Ausführungsform eines Reaktionsbereichs.
Figur 6 zeigt eine schematische Darstellung eines beispielhaften Austragbereichs, insbesondere eines Sammelbehälters für festkörperhaltiges Material.

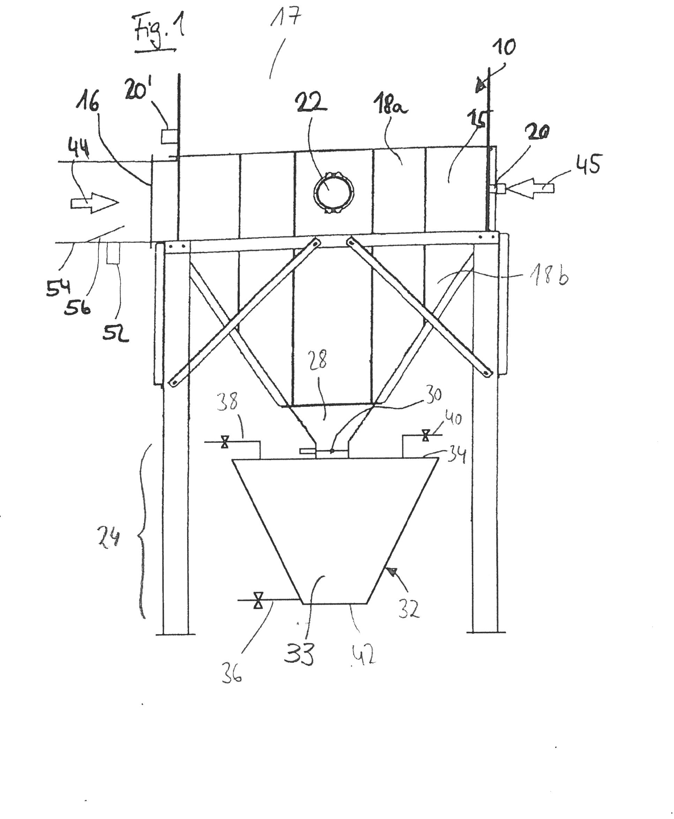

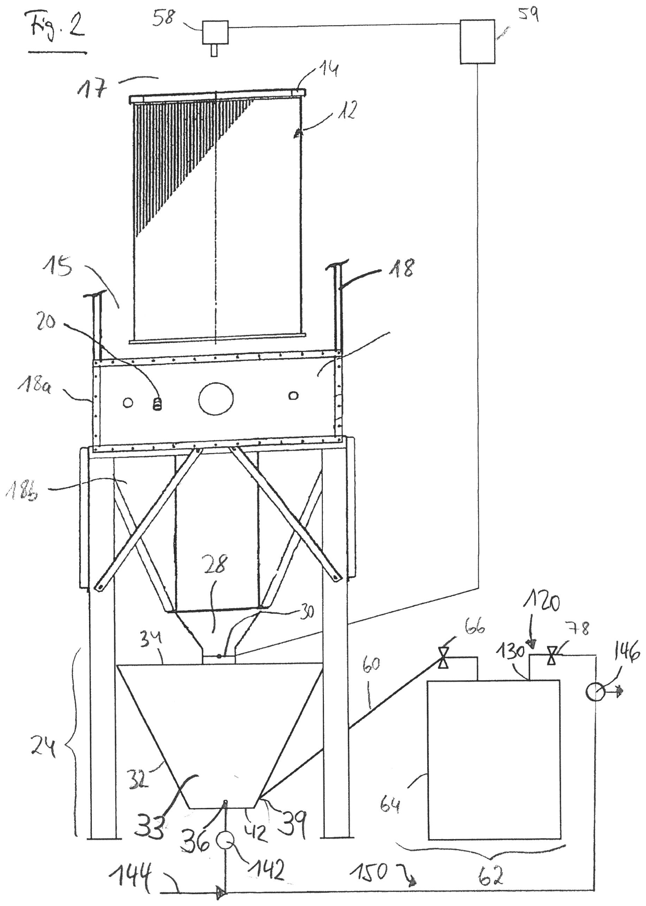

Die Figuren 1 und 2 zeigen in jeweils um 90 Grad zueinander verdrehte Seitenansichten eine Filtervorrichtung 10 zur Reinigung von Fremdkörper mitführendem Rohgas nach einer erfindungsgemäßen Ausführungsform. Die Filtervorrichtung 10 umfasst eine Filtereinheit 12 mit wenigstens einer Filtereinheit 14 (in Figur 1 nicht gezeigt, in Figur 2 ist eines der Filterelemente 14 der Filtereinheit 12 angedeutet). Die Filtereinheit 12 ist oberhalb einer Rohgaszuströmöffnung 16 in einem der Übersicht halber teilweise weggelassenen oberen Teil eines Gehäuses 18 angebracht. Die Filtereinheit 12 umfasst mehrere als Trockenfilter ausgebildete Filterelemente 14. Jedes der Filterelemente 14 ist als Starrkörperfilter ausgebildet. Damit soll zum Ausdruck gebracht werden, dass die Wände des Filterelements 14 genügend Steifigkeit besitzen, um das Filterelement 14 ohne Hilfe von weiteren Stützstrukturen aufrecht zu halten. Das Filterelement 14 ist in diesem Sinne eigenstabil. Die Filterelemente 14 sind an einer waagrecht verlaufenden gemeinsamen Halterung hängend befestigt und verlaufen parallel zueinander in vertikaler Richtung. Dies ist in Figur 2 schematisch angedeutet, die eines der Filterelemente 14 in etwa an seiner Einbauposition zeigt. Es sei darauf hingewiesen, dass auch ein anderer Einbau der Filterelemente 14 in das Gehäuse 18 möglich ist, beispielsweise ein waagrechter Einbau, die dem die Filterelemente in horizontaler Richtung verlaufen und an einer vertikalen Halterung befestigt sind. Jedes der Filterelemente 14 weist wenigstens eine Filteroberfläche auf, die vom Rohgas beaufschlagt wird. In den Figuren 1 und 2 befindet sich die vom Rohgas beaufschlagte Filteroberfläche auf der Außenseite eines der jeweiligen Filterelemente 14 (Rohgasseite). Nach Durchtritt durch eine Wand des Filterelements 14 gelangt gereinigtes Gas von der Rohgasseite zur Reingasseite, die dem von den Wänden des Filterelements 14 umgebenen Innenraum zugewandt ist. Das Filterelement 14 ist nach oben offen, so dass sich ein Reingasraum 17 aus dem Innenraum bis in einen Bereich oberhalb der Filtereinheit 12 erstreckt.

In dem in Figur 1 und 2 abgebildeten unteren Teil 18b nimmt das Gehäuse 18 die Form eines Trichters mit sich nach unten verjüngenden Seitenwänden an. An den unteren Bereich 18b schließt sich ein Reaktionsbereich 24 an, in welchen fremdkörperhaltiges Material, das sich auf der Rohgasseite an den Filterelementen angesammelt hat, nach Abreinigung eines jeweiligen der Filterelemente 14 (beispielsweise durch Beaufschlagung des jeweiligen Filterelements 14 mit einem Druckimpuls, siehe die in Figur 2 schematisch angedeutete Druckgasabreinigungseinheit 58) hineinfällt. Insbesondere enthält das in den Reaktionsbereich 24 gelangende Material fremdkörperhaltiges Material aus dem Rohgasstrom und/oder aus von der Filteroberfläche abgereinigtem Material. Der Reaktionsbereich 24 liegt stromabwärts des Gehäuses 18 und ist über einen Durchlass 28 mit dem unteren Bereich 18b des den Rohgasraum 20 umgebenden Gehäuses 18 verbunden. In dem Durchlass 28 ist eine erste Verschlusseinrichtung mit einem ersten Absperrorgan 30 angeordnet. Das Absperrorgan 30 kann ebenso wie weitere hier beschriebene Absperrorgane als Absperrventil, als Klappe, als Scheibenventil, oder als Quetschventil ausgebildet sein.

Der Reaktionsbereich 24 weist in dem gezeigten Beispiel einen trichterförmigen Behälter 32 auf, welcher einen Agglomerat-Auffangbereich 33 ausbildet. Der Behälter 32 hat in dem gezeigten Beispiel sich nach unten, also weg von dem Rohgasraum 20, verjüngende Seitenwände. Es ist auch möglich, dass der Behälter 32 eine andere Form einnimmt, beispielsweise eine zylindrische Form oder eine rechteckige Form. Der Behälter 32 weist an seinem Kopfende 34, also dem Ende des Behälters 32, das zum Rohgasraum 20 hin zeigt, einen optionalen weiteren Fluideinlass 38 auf und einen weiteren Fluidauslass 40, durch den überschüssiges Fluid, wie zum Beispiel überschüssiges Oxidationsmittel, überschüssiges Spülfluid, ein Wärmeübertragungsfluid zum Abtransport von bei der Reaktion entstehender Wärme oder ein Gemisch aus den vorab genannten Fluiden, den Behälter 32 verlassen kann. Es sei darauf hingewiesen, dass mehrere weitere Fluideinlässe 38 und mehrere weitere Fluidauslässe 40 vorgesehen sein können, falls gewünscht, und dass die Anordnung dieser weiteren Einlässe bzw. weiteren Auslässe am Behälter 32 beliebig gewählt werden kann.

Der Behälter 32 weist in seinem unteren Bereich bzw. an seinem Fußende 42, also an dem Ende des Behälters 32, das von dem Rohgasraum 15 entfernt angeordnet ist, einen Oxidationsmitteleinlass 36 auf. Der Oxidationsmitteleinlass 36 ist so ausgebildet, dass ein Oxidationsmittelstrom in den Agglomerat-Auffangbereich 33 eingeleitet kann. Es ist möglich, dass durch den Oxidationsmitteleinlass 36 neben Oxidationsmittel wie Sauerstoff auch andere Fluide in den den Agglomerat-Auffangbereich 33 umgebenden Behälter 32 eingeleitet werden, beispielsweise inerte Fluide, insbesondere inerte Gase wie zum Beispiel Stickstoff. Beimengung eines weiteren Fluids zu dem Oxidationsmittel kann zur Einstellung einer geeigneten Konzentration an Oxidationsmittel, zu Spülzwecken und/oder zum Abtransport von Wärme dienen. Sofern das weitere Fluid als Wärmeübertragungsfluid und/oder Spülfluid dient, könnte das weitere Fluid alternativ oder zusätzlich über einen oder mehrere weitere Einlässe, etwa den genannten weiteren Einlass 38, in den Behälter 32 eingeleitet werden. Der Oxidationsmitteleinlass 36 kann insbesondere als Fluidisieranordnung ausgebildet sein, etwa mit einem Fluidisierboden, so dass mit Einleitung des Oxidationsmittelstroms auch eine Auflockerung bzw. Fluidisierung von festkörperhaltigem Material im Agglomerat-Auffangbereich 33 erzielt wird.

Der Behälter 42 weist ferner einen Auslass 39 zum Abführen von festkörperhaltigem Material auf, der sich in der gezeigten Ausführungsform im unteren Bereich 42 des Behälters 32 befindet. Solches festkörperhaltiges Material wird bevorzugt oxidhaltige Fremdkörper enthalten, die bei der Oxidation entstanden sind. Es allerdings nicht notwendig, dass alle Fremdkörper und/oder von der Filteroberfläche abgereinigtes Material, welche in den Agglomerat-Auffangbereich 33 gelangt sind, bereits komplett oxidiert sind, wenn sie über den Auslass 39 aus dem Behälter 32 abtransportiert werden. Es ist ebenfalls möglich, dass auch stromabwärts des Auslasses 39 noch eine Oxidation von oxidierbaren Fremdkörpern stattfindet.

Die Prozessumgebung bei additiven Fertigungsverfahren, bei denen oxidierbare bzw. brennbare Rückstände anfallen, sollte normalerweise inert sein und sich nicht, oder jedenfalls nicht übermäßig, verändern. Dies gilt auch für die Behandlung von im Prozess anfallendem Abgas, insbesondere wenn das gereinigte Abgas als Kreislauf wieder in den Prozess zurückgeführt wird. Wenn brennbare Fremdkörper im Abgas mittels eines Trockenfilters abgereinigt werden sollen, wird in der Regel ein inertes Gemisch aus inerten Trägergas und partikelförmigen Fremdkörpern in den Rohgasraum gelangen, bei dem der Anteil von Sauerstoff und anderen Stoffen, die als Oxidationsmittel wirken können, unter einer vorbestimmten Schwelle liegt. Die Filtration des brennbare Fremdkörper mitführenden Rohgases findet somit unter inerten Bedingungen statt und Zugabe von Sauerstoff oder anderen oxidierend wirkenden Stoffen zum Rohgasraum ist nicht erwünscht. Dies erschwert die Möglichkeit, an der Filteroberfläche angelagertes festkörperhaltiges Material durch Oxidation unschädlich zu machen.

Der in Figur 1 schematisch mit dem Pfeil 44 bezeichnete Rohgasstrom, welcher Fremdkörper mit sich führt, die mit der Vorrichtung 10 abgeschieden werden sollen, tritt über eine Rohgaszuführleitung 54 durch die Rohgaszuströmöffnung 16 in den vom Gehäuse 18 umschlossenen Rohgasraum 15 ein. Der Rohgasstrom 44 wird nach Eintritt in den Rohgasraum 15 zu der Filtereinheit 12 transportiert. Auf der der Rohgaszuströmöffnung 16 gegenüberliegenden Seite des Gehäuses 18 befindet sich eine Filtrationshilfsstoffzuführöffnung 20, durch welche Filtrationshilfsstoffe, beispielsweise Feststoffe mit flammhemmenden Eigenschaften wie CaCo₃ oder Feststoffe auf Basis von SiO₂, aus einem Vorratsbehälter in den Rohgasraum 15 geleitet werden können. Die Filtrationshilfsstoffe können in den Rohgasraum 15 eingeleitet werden, bevor dieser mit dem Rohgasstrom 44 beschickt wird. Die eingeleiteten Filtrationshilfsstoffe lagern sich dann insbesondere an Filteroberflächen der Filterelemente 14 und/oder an Wänden des Rohgasraums 15 an und bilden dort jeweils eine Schicht aus Filtrationshilfsstoff (Precoat-Schicht). Der durch die Filtrationshilfsstoffzuführöffnung 20 in den Rohgasraum 15 gelangende Strom an Filtrationshilfsstoffen ist in Figur 1 mit einem Pfeil 45 bezeichnet.

Alternativ oder zusätzlich kann eine Filtrationshilfsstoffzuführöffnung 52 in der Rohgaszuführleitung 54 angeordnet sein. Die Rohgaszuführleitung 54 ist mit der Rohgaszuströmöffnung 16 verbunden. Dies ermöglicht es den Filtrationshilfsstoff in den Rohgasstrom 44 einzubringen bevor dieser in den Rohgasraum 15 der Filtervorrichtung 10 eintritt. Hieraus ergibt sich eine vorteilhafte Durchmischung von in dem Rohgasstrom 44 enthaltenen Fremdkörpern und dem Filtrationshilfsstoff, um die Selbstentzündungsschwelle des Rohgases heraufzusetzen. Optional kann eine Prallplatte oder ein Verteilerblech 56 so in der Nähe des Filtrationshilfsstoffzuführöffnung 52 angeordnet sein, dass sich der Filtrationshilfsstoff gleichmäßig im Rohgasstrom 44 verteilt.

Der Filtereinheit 12 ist eine in Figur 2 schematisch dargestellte Druckgasabreinigungseinheit 58 zugeordnet, die sich im Reingasraum 17 der Filtereinheit 12 oberhalb der Filterelemente 14 befindet. In gewissen zeitlichen Abständen beaufschlagt die Druckgasabreinigungseinheit 58 ein jeweiliges Filterelement 14, so dass dieses von dem Reingasraum 17 her einen Druckstoß erfährt. Der Druckstoß führt dazu, dass auf der Rohgasseite des jeweiligen Filterelements 14 auf der Filteroberfläche angelagerte Fremdkörper, wie zum Beispiel leicht selbstentzündliche Fremdkörper und in manchen Fällen auch Filtrationshilfsstoffe, sich von dem Filterelement 14 ablösen und infolge ihrer Schwerkraft nach unten fallen. Dieses von der Filteroberfläche abgereinigte Material fällt dann zusammen mit Fremdkörpern und auch Filtrationshilfsstoffen durch den Durchlass 28 in den Agglomerat-Auffangbereich 33 im Reaktionsbereich 24.

Das erste Absperrorgan 30 ist normalerweise geöffnet, so dass eine Fluidverbindung zwischen dem Rohgasraum 15 und dem Reaktionsbereich 24 besteht. Dies gilt insbesondere beim Beginn und während eines Abreinigungszyklus für die Filterelemente 14. Auf diese Weise kann bei der Abreinigung von der Filteroberfläche abfallendes Material ungehindert, jedenfalls weitgehend ungehindert, in den Agglomerat-Sammelbereich 33 des Reaktionsbereichs 24 fallen und lagert sich nicht nennenswert am Boden oder an den Wänden des den Rohgasraum 15 umgebenden Gehäuses 18 ab. Sobald die Abreinigung erfolgt ist und ein Oxidationszyklus im Reaktionsbereich 24 eingeleitet werden soll, wird das erste Absperrorgan 30 geschlossen, so dass der Agglomerat-Auffangbereich 33 des Reaktionsbereichs 24 von dem Rohgasraum 15 jedenfalls für den Zeitraum fluiddicht getrennt ist, über den eine oxidationsmittelhaltige Umgebung im Agglomerat-Auffangbereich 33 herrscht. Dann wird über den Oxidationsmitteleinlass 36 das Oxidationsmittel in den Agglomerat-Auffangbereich 33 eingeleitet, um eine spontane Oxidation von in den Agglomerat-Auffangbereich 33 gelangtme Material herbeizuführen. Der Oxidationsmitteleinlass 36 ist so ausgebildet, dass das Oxidationsmittel das festkörperhaltige Material im Agglomerat-Auffangbereich 33, insbesondere das von der Filteroberfläche abgereinigte oxidationsfähige Material durchströmt bzw. durchmischt und damit die Oxidation dieses Materials spontan, d.h. ohne zusätzlichen Eintrag von Energie über Heizeinrichtung, Zündeinrichtung o.ä., in Gang bringt. Die durch die Oxidation gebildeten oxidhaltigen, jetzt reaktionsträgen Fremdkörper, überschüssiges Oxidationsmittel und weitere Stoffe können dann über den Auslass 39 entlang einer Austragleitung 60 in einen dem Agglomerat-Auffangbereich 33 nachgelagerten Austragbereich 62 gefördert werden. Nach Abschluss dieses Ausleitvorgangs ist die Konzentration von Oxidationsmittel im Agglomerat-Auffangbereich 33 soweit abgesunken, dass keine Kontamination des Rohgasraums 15 mehr zu befürchten ist, woraufhin das Absperrorgan 30 wieder geöffnet werden kann. Zur Unterstützung des Austreibens von Oxidationsmittel aus dem den Agglomerat-Auffangbereich 33 umgebenden Behälter 32 kann über den optionalen weiteren Einlass 38 ein Spülfluid in Form von Stickstoff, eines Edelgases oder eines anderen inerten Gases in den Behälter 32 eingeleitet werden. Dadurch kann das restliche, sich noch in dem Behälter 32 befindlich Oxidationsmittel über den weitern Fluidauslass 40 aus dem Behälter 32 und somit aus dem Agglomerat-Auffangbereich 33 entfernt werden, um eine inerte Umgebung in dem Behälter 32 bzw. in dem Agglomerat-Auffangbereich 33 herzustellen. **Im** geöffneten Zustand des Absperrorgans 30 können wieder Fremdkörper aus dem Rohgasstrom 44 sowie von der Filteroberfläche abgereinigtes Material ohne Zwischenlagerung in den Reaktionsbereich 24 gelangen. Dadurch, dass die Fremdkörper nicht im unteren Bereich 18b des Gehäuses 18 gesammelt werden, werden Staubbrücken effizient vermieden, welche ansonsten ein Nachrutschen der Fremdkörper in den Reaktionsbereich 24 stark beeinträchtigen würden.

Es ist als Variante denkbar, dass über den Oxidationsmitteleinlass 36 und/oder über den weiteren Einlass 38 wenigstens zeitweilig ein kontinuierlicher Strom eines' inerten Fluids, zum Beispiel Stickstoff oder ein Edelgas, durch den Behälter 32 geleitet wird, der den Agglomerat-Auffangbereich 33 des Reaktionsbereichs 24 durchquert, zum Auslass 39 strömt und durch diesen den Behälter 32 wieder verlässt. Sobald eine Abreinigung des Filterelements 14 bzw. mehrerer Filterelemente erfolgt ist, und das Absperrorgan 30 geschlossen ist, kann diesem Fluidstrom eine ausreichende Menge an Oxidationsmittel zugefügt werden, so dass das im Agglomerat-Auffangbereich 33 befindliche Material durch Oxidation umgesetzt werden kann. Sobald die Umsetzung im gewünschten Grad erfolgt ist, könnte die Zufuhr von Oxidationsmittel zu dem Fluidstrom gestoppt werden, und die oxidhaltigen Fremdkörper bzw. die umgesetzten Fremdkörper mit dem Fluidstrom aus dem Agglomerat-Auffangbereich 33 bzw. aus dem Behälter 32 über die Austragleitung 60 in den Austragbereich 62 abtransportiert werden.

Die Koordination zwischen der Aktivierung der Druckgasabreinigungseinheit 58, also dem Abreinigen eines jeweiligen oder mehrerer jeweiligen der Filterelemente 14 von an der Filteroberfläche anhaftendem Material und dem Öffnen und Schließen des Absperrorgans 30 erfolgt über eine Steuereinheit 59. Die Steuereinheit 59 kann so ausgebildet sein, dass das Absperrorgan 30 als Grundeinstellung geöffnet ist, so dass dadurch die Fremdkörper im Rohgas, die nicht bis zu dem Filterelement 14 gelangen oder außerhalb von Abreinigungszyklen von einer Filterelementoberfläche abfallen, direkt in den Agglomerat-Auffangbereich 33 des Reaktionsbereichs 24 hineinfallen. Auch bei der Abreinigung der Filterelemente 14 bleibt das Absperrorgan 30 geöffnet, damit das von der Filteroberfläche abgereinigte Material ohne Zwischenlagerung in den Reaktionsbereich 24 abgeführt werden kann. Sobald die Abreinigung abgeschlossen ist, schließt die Steuereinheit 59 das Absperrorgan 30 kurzzeitig, damit in den nun von dem Rohgasraum 15 getrennten Reaktionsbereich 24, insbesondere in den den Agglomerat-Auffangbereich 33 umgebenden Behälter 32, Oxidationsmittel eingelassen werden kann. Nach einer vorbestimmten Zeit kann man davon ausgehen, dass von der Filteroberfläche abgereinigtes Material in dem Agglomerat-Auffangbereich 33 in ausreichendem Maß zu oxidhaltigen Fremdkörpern oxidiert sind. Soweit zugebenes Oxidationsmittel nicht bei der Reaktion verbraucht worden ist, wird dann überschüssigem Oxidationsmittel aus dem Agglomerat-Auffangbereich 33, so dass im Reaktionsbereich 24 wieder eine inerte Umgebung vorherrscht, das heißt, dass eine Oxidationsmittelkonzentration so gering ist, dass keine Oxidation mehr stattfindet, selbst wenn Fremdkörper oder von der Filteroberfläche abgereinigtes Material in den Agglomerat-Auffangbereich 33 gelangt. Dann kann die Steuereinheit 59 veranlassen, dass das Absperrorgan 30 wieder geöffnet wird, um wieder Fremdkörper und von der Filteroberfläche abgereinigtes Material in den Agglomerat-Auffangbereich 33 einzulassen.

In bestimmten Ausführungsformen könnte vorgesehen sein, dass der Behälter 32 durch eine Rütteleinrichtung und/oder eine Klopfeinrichtung bewegbar bzw. baufschlagbar ist, um entsprechende Schaukelbewegungen, Erschütterungen, Rüttelbewegungen usw. des Behälter 32 zu erzeugen und so ein Nachrutschen von festkörperhaltigem Material durch den Auslass 39 zu erleichtern. Auf diese Weise kann eine möglichst vollständige Entleerung des Agglomerat-Auffangbereichs 33 ermöglicht werden.

Der Austragbereich 62 umfasst vorzugsweise neben der Austragleitung 60 noch einen Sammelbehälter 64, in dem die oxidhaltigen Fremdkörper gesammelt werden. Fluides Material, insbesondere gasförmiges Material, das über die Austragleitung 60 zum Sammelbehälter 64 gelangt ist, wird über einen Abgasauslass 130 aus dem Sammelbehälter 64 wieder abgegeben.

Optional kann in der Austragleitung 60, beispielsweise in einem Bereich nahe des Sammelbehälters 64, eine zweite Verschlusseinrichtung mit einem zweiten Absperrorgan 66 vorgesehen sein. Die zweite Verschlusseinrichtung ist somit ebenfalls dem Austragbereich 62 zuzuordnen. Die zweite Verschlusseinrichtung ist dazu ausgebildet, einen noch zum Reaktionsbereich 24 gehörenden stromaufwärts liegenden Teil des Austragbereichs 62, in dem eine Oxidation von fremdkörperhaltigem Material noch stattfindet, von einem stromabwärts liegenden Teil zu trennen, in dem keine derartige Oxidation mehr stattfindet. Es ist jedoch nicht unbedingt erforderlich, die zweite Verschlusseinrichtung vorzusehen. Es hat sich herausgestellt, dass die gewünschten Oxidationsreaktionen vollständig im Austragbereich 62, insbesondere in der Austragleitung 60, stattfinden können und insbesondere abgeschlossen sein können, bevor das durch die Austragleitung 60 geförderte Material ein stromabwärts liegendes Ende der Austragleitung 60 erreicht, an dem die Austragleitung 60 beispielsweise in den Sammelbehälter 64 mündet.

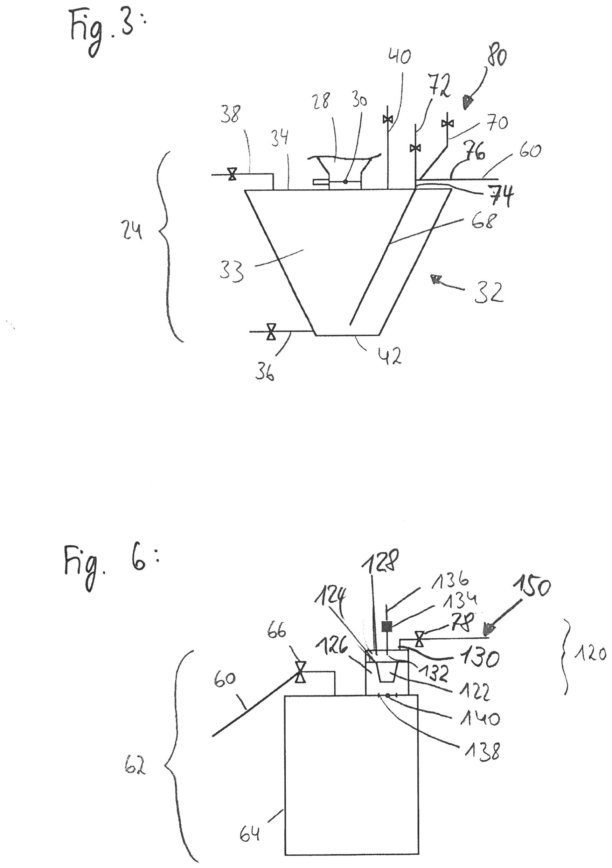

Ein stromabwärts liegendes Ende der Austragleitung 60 mündet in den Sammelbehälter 64. Bei Erreichen des Sammelbehälters 64 fällt festkörperhaltiges Material, insbesondere bei der Oxidation entstandene oxidhaltige Fremdkörper, in den Sammelbehälter 64 des Austragbereichs 62 und kann so entsorgt werden. An der Oberseite mündet ein Abgasauslassbereich 120 (siehe Figur 6) in den Sammelbehälter 64. In dem Abgasauslassbereich 120 befindet sich ein Abgasauslass 130, über den überschüssiges fluides Material, insbesondere Oxidationsmittel, Spülfluid, Förderfluid, Wärmeübertragungsfluid und anderes Fluid aus dem Austragbereich 62 abgeführt werden kann. Dieses überschüssige fluide Material (im Folgenden auch einfach als Abgas bezeichnet) kann, falls gewünscht über ein Absperrventil 78, an die Umgebung oder in ein Abgassystem abgegeben werden. Alternativ kann dieses überschüssige fluide Material auch ganz oder zum Teil wieder zum Reaktionsbereich 24, insbesondere zum Oxidationsmitteleinlass 36, zurückgeführt werden, wie in der Figur 2 gezeigt ist. Auch in diesem Fall kann optional ein Absperrventil 78 vorgesehen sein. Die in Figur 2 gezeigte Anordnung wird nachfolgend noch detaillierter beschrieben.

Figur 3 zeigt eine weitere Ausführungsform eines Behälters 32. Es werden nachfolgend nur die Merkmale genauer beschrieben, die sich von dem Behälter 32 aus den Figuren 1 und 2 unterscheiden. Zur Beschreibung der weiteren Merkmale in Figur 3 wird auf die Beschreibung der Figuren 1 und 2 verwiesen, in denen gleiche oder entsprechende Merkmale mit denselben Bezugszeichen versehen sind. In der Ausführungsform von Figur 3 ist eine pneumatische Fördereinrichtung, in diesem Fall mit der Konfiguration eines Feststoffinjektors 80, vorgesehen, um Material aus dem Behälter 32 zur fördern. Dabei ragt eine Hohllanze 68 von dem Kopfende 34 des Behälters 32 in den Innenraum des Behälters 32. Eine Spitze der Hohllanze 68 erstreckt sich bis in die Nähe des Fußendes 42 des Behälters 32. Die Hohllanze 68 weist in einem an ihrer Spitze liegenden Bereich eine oder mehrere Öffnungen auf, durch die Material aus dem Behälter 32 abgeführt werden kann, und ist mit einem Förderanschluss 74 des Feststoffinjektors 80 verbunden.

Alternativ oder zusätzlich zu einem Feststoffinjektor könnte auch ein Sauggebläse vorgesehen sein, um Material, insbesondere gasförmiges Material, aus dem Behälter 32 zu fördern. Das Sauggebläse könnte ebenso wie der der Feststoffinjektor über die Hohllanze 68 an den Behälter 32 angeschlossen sein und insbesondere zum Absaugen von Oxidationsmittel und anderen gasförmigen Fluid aus dem Agglomerat-Auffangbereich 33 vorgesehen sein.

Der Feststoffinjektor 80 weist neben dem Förderanschluss 74 einen Förderfluideinlass 70 auf, welcher mit Förderfluid, beispielsweise Luft, beaufschlagbar ist, sowie einen Materialabfluss 76, der mit dem Förderfluideinlass 70 und dem Förderanschluss 74 in Verbindung steht. Der Förderanschluss 74 verbindet die Hohllanze 68 mit einem Durchgang, der den Förderfluideinlass 70 mit dem Materialabfluss 76 verbindet. Der Förderfluideinlass 70 hat in der Regel eine sich zum Materialauslass 76 hin verjüngende Form, um bei Beaufschlagung mit Förderfluid das Förderfluid in dem Durchgang zu beschleunigen und dadurch einen Unterdruck in der Hohllanze 68 zu erzeugen und somit festkörperhaltiges Material durch die Hohllanze 68 aus dem Behälter 32 abzusaugen. Der Materialabfluss 76 des Feststoffinjektors 80 ist mit der Austragleitung 60 verbunden. Bei Beaufschlagung des Förderfluideinlasses 70 wird das Förderfluid vom Förderfluideinlass 70 über den Materialabfluss 76 zur Austragleitung 60 geleitet und erzeugt dabei einen Unterdruck in der Hohllanze 68. Durch diesen Unterdruck wird im Behälter 32 befindliches festkörperhaltiges Material, insbesondere bei der Reaktion gebildete oxidhaltige Fremdkörper, zusammen mit gasförmigem Material, insbesondere unverbrauchtem Oxidationsmittel, angesaugt und durch die Hohllanze 68 zum Materialabfluss 76 gefördert. Dabei vermischt sich das angesaugte Material mit dem Förderfluid und wird durch den Materialabfluss 76 in die Austragleitung 60 des Austragbereichs 62 gefördert.

Je nach Beaufschlagung des Förderfluideinlasses 70 mit Förderfluid kann die Sogstärke des Feststoffinjektors 80 eingestellt werden und dadurch die jeweils aus dem Behälter 32 geförderte Menge an festkörperhaltigem Material und gasförmigem Material bzw. das Mischungsverhältnis zwischen aus dem Behälter 32 gefördertem Material und zugemischtem Förderfluid eingestellt werden. Dies erlaubt letztendlich eine genaue Kontrolle der im Behälter 32 ablaufenden Oxidationsreaktionen wie auch der ggf. stromabwärts des Feststoffinjektors 80 in der Austragleitung 60 noch ablaufenden Oxidationsreaktionen.

Aus dem Behälter 32 können die oxidhaltigen Fremdkörper auch auf eine alternative Weise abgesaugt werden. Hierfür kann in dem Austragbereich 62 ein Unterdruck durch zum Beispiel ein Gebläse oder eine Absaugeinrichtung erzeugt werden, wodurch die oxidhaltigen Fremdkörper durch die Hohllanze 68 in die Austragleitung 60 des Austragbereichs 62 abgesaugt werden. Neben den oxidhaltigen Fremdkörpern kann auch beispielsweise überschüssiges Oxidationsmittel und/oder weitere Stoffe bzw. Fluide aus dem Behälter 32 abgesaugt werden. Sobald das Absaugen abgeschlossen ist, also sobald wenig bis kein Oxidationsmittel mehr im Agglomerat-Auffangbereich 33 vorhanden ist, kann das Absperrorgan 30 den Durchlass 28 vom Rohgasraum 15 zum Agglomerat-Auffangbereich 33 freigeben. In so einer Konstellation ist der Förderfluideinlass 70 nicht notwendig, kann aber optional zur Unterstützung des Abtransports von oxidhaltigen Fremdstoffen vorgesehen sein.

Anstatt oder zusätzlich zur Verwendung eines Unterdrucks zum Absaugen der oxidhaltigen Fremdkörper, könnte auch ein Förderfluid, insbesondere ein Fördergas, über den Spülfluideinlass 38 in den Behälter 32 eingeleitet werden. Das Förderfluid steht unter Überdruck und drückt dann, im Falle eines Gases pneumatisch, die oxidhaltigen Fremdkörper durch die Hohllanze 68 in die Austragleitung 60 zum Austragbereich 62. Zur Unterstützung kann Förderfluid durch den Förderfluideinlass 70 in die Austragleitung 60 eingeleitet werden, um die oxidhaltigen Fremdkörper weiter zu transportieren und eine Bildung von Staubbrücken zu vermeiden. Das Förderfluid kann ein inertes Fluid sein wie Stickstoff. Das Förderfluid kann auch Oxidationsmittel enthalten, beispielweise Sauerstoff. Auf diese Weise kann dafür gesorgt werden, dass die Oxidationsreaktionen beim Transport von Material aus dem Behälter 32 in den Austragbereich 62 weiterhin ablaufen. Es bietet sich beispielsweise an, Luft als Förderfluid einzusetzen, wenn die Zugabe von Oxidationsmittel zum Förderfluid erwünscht ist. Man kann auch ein inertes Fluid als Förderfluid einsetzen und Oxidationsmittel über einen separaten Einlass in den Behälter 32 einleiten, falls gewünscht.

Um sicher das überschüssige Oxidationsmittel aus dem Agglomerat-Auffangbereich 33 des Reaktionsbereichs 24 bzw. dem Behälter 32 zu entfernen, kann im Anschluss an das Abtransportieren der oxidhaltigen Fremdkörper das überschüssige Oxidationsmittel über den Fluidauslass 40 aus dem Innenraum des Behälters 32 abgeführt werden, vorzugsweise durch das Einlassen eines inerten Fluids, zum Beispiel Stickstoff oder Edelgas, durch den Einlass 38 oder den Oxidationsmitteleinlass 36, wobei das inerte Fluid das überschüssige Oxidationsmittel aus dem Agglomerat-Auffangbereich 33 des Reaktionsbereichs 24 bzw. dem Behälter 32 verdrängt.

Es ist weiterhin möglich, nach erfolgtem Abführen von Material aus dem Behälter 32 mittels des Feststoffinjektors 80 auch den Behälter 32 mit inertem Fluid, beispielsweise mit einem inerten Gas wie Stickstoff, mittels des Feststoffinjektors 80 zu beaufschlagen. Der Feststoffinjektor 80 besitzt einen zusätzlichen Anschluss 72, der mit einem Spülfluid beaufschlagt werden kann, um eine möglicherweise verstopfte Fluidverbindung zwischen der Hohllanze 68 und dem Materialabfluss 76 wiederherzustellen. Durch Beaufschlagen des Spülanschlusses 72 mit inertem Fluid und ggf. Verschließen des Materialabflusses 76 kann auf einfache Weise das inerte Fluid in den Behälter 32 geleitet werden, um noch im Agglomerat-Auffangbereich 33 verbliebenes Oxidationsmittel auszuspülen.

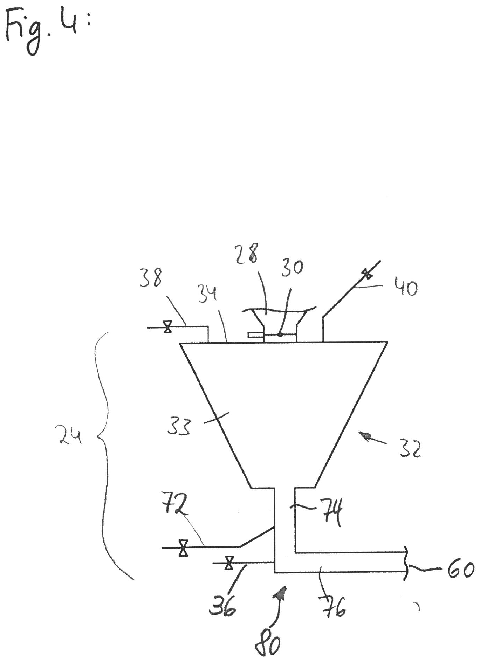

Figur 4 zeigt eine weitere Ausführungsform eines Behälters, bei der ähnlich wie in Figur 3 eine pneumatische Fördereinrichtung, in diesem Fall mit der Konfiguration eines Feststoffinjektors 80, vorgesehen ist, um Material aus dem Behälter 32 zu fördern. Es werden nachfolgend nur die Merkmale genauer beschrieben, die sich von dem Behälter 32 aus den Figuren 1, 2 und 3 unterscheiden. Zur Beschreibung der weiteren Merkmale in Figur 4 wird auf die Beschreibung der Figuren 1, 2 und insbesondere der Figur 3 verwiesen, in denen gleiche oder entsprechende Merkmale mit denselben Bezugszeichen versehen sind.

Im Unterschied zu der Ausführungsform von Figur 3 ist bei der Ausführungsform gemäß Figur 4 der Feststoffinjektor 80 an der untersten Stelle des Behälters 32 angeordnet, in der gezeigten Variante mit nach unten aufeinander zulaufenden Seitenwänden des Behälters 32 dort, wo die Seitenwände sich am nächsten kommen. Am Boden des Behälters 32 ist eine Öffnung ausgebildet, die mit dem Förderanschluss 74 des Feststoffinjektors 80 in Verbindung steht und durch die Material aus dem Behälter 32 angesaugt werden kann. Es versteht sich, dass auch mehrere solcher Öffnungen am Boden des Behälters 32 ausgebildet sein können. Der mit Förderfluid, beispielsweise Luft, beaufschlagbare Förderfluideinlass 36 des Feststoffinjektors 80 dient in dieser Ausführungsform zugleich als Oxidationsmitteleinlass 36 für den Behälter 32 und ist deshalb mit dem Bezugszeichen 36 bezeichnet.

Der Materialabfluss 76 ist wiederum mit der Austragleitung 60 verbunden. Der Förderfluideinlass 36 steht wie üblich mit dem Materialabfluss 76 über einen Durchgang in Verbindung, der eine sich zum Materialabfluss 76 hin verjüngende Form hat, um bei Beaufschlagung des Förderfluideinlasses 36 mit Förderfluid das Förderfluid in dem Durchgang zu beschleunigen. Bei Beaufschlagung des Förderfluideinlasses 36 wird das Förderfluid vom Förderfluideinlass 36 über den Materialabfluss 76 zur Austragleitung 60 geleitet und erzeugt dabei einen Unterdruck, welcher dafür sorgt, dass im Behälter 32 befindliches festkörperhaltiges Material, insbesondere bei der Reaktion gebildete oxidhaltige Fremdkörper, zusammen mit gasförmigem Material, insbesondere unverbrauchtem Oxidationsmittel, angesaugt und zum Materialabfluss 76 gefördert wird. Dabei vermischt sich das angesaugte Material mit dem Förderfluid und wird durch den Materialabfluss 76 in die Austragleitung 60 des Austragbereichs 62 gefördert.

Bei Beaufschlagung des Förderfluideinlasses 36 mit nur geringem Überdruck reicht die Beschleunigung des Förderfluids in dem Durchgang zum Materialabfluss 76 nicht aus, um einen nennenswerten Unterdruck zu erzeugen. In diesem Fall wird das Förderfluid durch den Förderanschluss 74 in den Behälter geleitet. Dieser Effekt kann noch durch Verschließen des Materialabflusses 76 verstärkt werden. Beaufschlagt man also den Förderfluideinlass 36 des Feststoffinjektors 80 mit lediglich unter geringem Überdruck stehendem oxidationsmittelhaltigem Förderfluid, z.B. Luft, so wird in Endeffekt dem Behälter 32 bzw. dem Agglomerat-Auffangbereich 33 Oxidationsmittel zugeführt. Ansonsten entspricht die Funktionsweise des Feststoffinjektors 80 in Figur 4 derjenigen des Feststoffinjektors 80 gemäß Figur 3.

Auch der Feststoffinjektor 80 gemäß Figur 4 besitzt einen Anschluss 72, der mit einem Spülfluid beaufschlagt werden kann, um eine möglicherweise verstopfte Fluidverbindung zwischen dem Förderanschluss 74 und dem Materialabfluss 76 wiederherzustellen. Durch Beaufschlagen des Spülanschlusses 72 mit inertem Fluid und ggf. Verschließen des Materialabflusses 76 kann auf einfache Weise inertes Fluid in den Behälter 32 geleitet werden, um noch im Agglomerat-Auffangbereich 33 verbliebenes Oxidationsmittel auszuspülen. Man könnte durch Beaufschlagen des Anschlusses 72 mit oxidationsmittelhaltigem Fluid auf diese Weise auch Oxidatationsmittel in den Agglomerat-Auffangbereich 33 bringen, falls gewünscht.

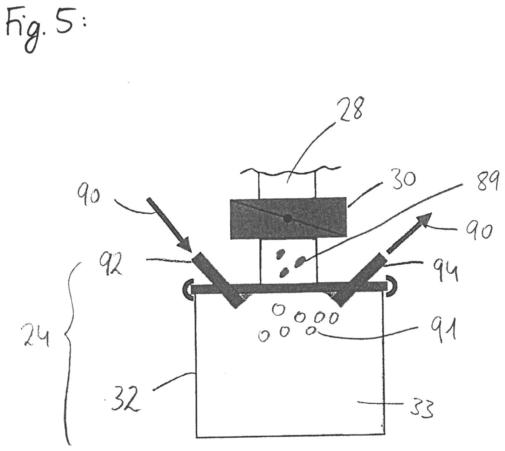

Figur 5 zeigt den in dem Behälter 32 befindlichen Agglomerat-Auffangbereich 33 des Reaktionsbereichs 24 mit dem in Flussrichtung des abgereinigten Materials vorgelagerten ersten Absperrorgan 30. In Figur 5 ist schematisch dargestellt, wie das von der Filteroberfläche abgereinigte Material 89 aus Richtung des Absperrorgans 30 in den Behälter 32 fällt. Dabei kreuzt das fallende, von der Filteroberfläche abgereinigte Material einen Oxidationsmittelstrom 90, der von einem Oxidationsmitteleinlass 92 zu einem Oxidationsmittelauslass 94 strömt. Beim Durchfallen des Oxidationsmittelstroms 90 reagiert das von der Filteroberfläche abgereinigte Material mit dem Oxidationsmittel spontan und wandelt sich dadurch in reaktionsträge und/oder oxidhaltige Fremdkörper 91 um. Die bei der Oxidation entstehenden oxidhaltigen Fremdkörper werden hauptsächlich über den Oxidationsmittelauslass 94 über die in Figur 5 nicht dargestellte Austragleitung 60 zu dem dem Behälter 32 nachgelagerten Austragbereich 62 abgeführt. Auch in der Austragleitung 60 kann die Oxidation von noch nicht oxidierten Fremdkörpern weitergehen. Die bei der Reaktion entstehende Wärme kann zusammen mit dem Oxidationsmittelstrom 90, der in der Regel ein Gemisch aus Oxidationsmittel, z.B. Sauerstoff, und einer inerten Komponente, z.B. Stickstoff oder Edelgas ist, durch den Oxidationsmittelauslass 94 abgeführt werden.

In Figur 6 ist eine Ausführungsform des aus dem Sammelbehälter 64 herausführenden Abgasauslassbereichs 120 gezeigt. Der Abgasauslassbereich 120 weist eine Filtereinheit 122 auf, die an einer Trennwand 124 gelagert ist. Die Filtereinheit 122 kann ein oder mehrere Filterelemente aufweisen. Die Trennwand 124 trennt den Abgasauslassbereich 120 in einen Rohgasraum 126 und einen Reingasraum 128. **In** den Rohgasraum 126 gelangt ein Gemisch aus festkörperhaltigem Material (insbesondere von oxidhaltigen Fremdkörpern nicht oxidierten Fremdkörpern, ggf. von Filtrationshilfsmittel, anderen Feststoffen und Agglomeraten aus solchen Stoffen) und Material in der fluiden Phase, insbesondere gasförmiges Material (vor allem überschüssiges Oxidationsmittel, Förderfluid, Spülfluid, Kühlfluid usw.). Die Filtereinheit 122 ist dazu ausgebildet, das im Rohgasraum 126 ankommende Gemisch zu filtern und so von partikelförmigen Oxidationsrückständen und anderen partikelförmigen Fremdstoffen zu befreien. **Im** Reingasraum 128 befindet sich dann ein gefiltertes Gemisch in der fluiden Phase, das über den Abgasauslass 130, der an dem Reingasraum 128 angeordnet ist, abgeführt wird. Das Gemisch in der fluiden Phase ist insbesondere gasförmig und wird deshalb im Folgenden vereinfachend als Abgas bezeichnet. Dieses Abgas kann zum Beispiel über die Absperreinrichtung 78 in die Umgebung oder an ein externes Abgassystem abgegeben werden. Alternativ kann dieses Abgas auch in den Reaktionsbereich 24 zurückgeführt werden, beispielsweise zum Oxidationsmitteleinlass 36, wie in Figur 6 angedeutet ist. Es ist denkbar, einen Teil des Abgases an die Umgebung oder in ein externes Abgassystem abzugeben und einen anderen Teil des Abgases in den Reaktionsbereich 24, beispielsweise zum Oxidationsmitteleinlass 36, zurückzuführen. Man kann in diesem Fall eine Regelung des Verhältnisses des in den Reaktionsbereich 24 zurückgeführten Abgasstroms zum abgegebenen Abgasstrom vorsehen. Diese Regelung kann insbesondere so eingerichtet sein, dass immer nur so viel Abgas in den Kreislauf, insbesondere in den Reaktionsbereich 24 zurückgeführt wird, dass der Fluiddruck (insbesondere der Gasdruck) in dem Kreislaufsystem (insbesondere im Reaktionsbereich 24) einen vorbestimmten oberen Grenzwert nicht überschreitet, insbesondere innerhalb eines vorbestimmten Bereichs bleibt.

**Im** Reingasraum 128 ist zudem eine der Filtereinheit 122 zugeordnete Druckgasabreinigungseinheit angeordnet, welche zur Erzeugung von das oder die Filterelemente zur Abreinigung beaufschlagenden Druckimpulsen ausgebildet ist. Die Druckimpulse gelangen über eine Druckgasöffnung 132 aus einem Druckgasspeicher 134 in den Reingasraum 128 und von dort zu dem oder den Filterelementen der Filtereinheit 122. Der Druckgasspeicher 134 kann vorzugsweise über eine Druckgasleitung 136 mit Druckgas gefüllt werden. Die Druckgasabreinigung dient zur Abreinigung der Filtereinheit 122, sobald sich die Filterleistung der Filtereinheit 122 verschlechtert. **In** dem Fall wird das Druckgas in Form von Druckgasimpulsen in den Reingasraum 128 eingeleitet, wodurch Filterelementwände mit Druckimpulsen beaufschlagt werden und Fremdkörper, die sich rohgasseitig auf der Filtereinheit 122 abgesetzt haben, von der Filtereinheit 122 abgereinigt werden. Diese Fremdkörper fallen dann aus dem Abgasauslassbereich 120, durch einen Durchlass 136 in den Sammelbehälter 64. **In** dem Durchlass 138 ist optional ein Absperrorgan 140 angeordnet, um den Austragbereich 62 von dem Abgasauslassbereich 120 zu trennen. Es sei angemerkt, dass es nicht unbedingt erforderlich ist, die Filtereinheit 122 mit abreinigbaren Filterelementen auszustatten, und man beispielsweise durchaus in der Filtereinheit 122 mit Speicherfiltern arbeiten könnte, die von Zeit zu Zeit ausgewechselt werden müssen.

Um eine Rückführung von Fluid, insbesondere von Förderfluid und/oder nicht verbrauchtem Oxidationsmittel zu erzielen, kann vorgesehen sein, den Abgasauslass 130 mit dem Reaktionsbereich 24, insbesondere mit dem Oxidationsmitteleinlass 36 zu verbinden, wie in Figur 2 schematisch als Abgasrückführleitung 150 angedeutet ist. Es versteht sich, dass das in Figur 2 und 6 gezeigte Absperrventil 78 in der Abgasrückführleitung 150 optional ist und auch eine Abgasrückführleitung 150 ohne Absperrventil möglich ist. Durch die Rückführung entsteht ein geschlossener Kreislauf, wobei über die Abgasrückführleitung 150 inertes Fluid, das dem vorangehend beschriebenen Prozess zur Trockenfiltration als Förderfluid und/oder Spülfluid und/oder Wärmeableitungsfluid zugegeben wurde, nach Durchlauf durch den Prozess wieder in den Prozess zurückgeführt werden kann. Auf diese Weise lässt sich eine beträchtliche Einsparung von erforderlichem inerten Fluid erzielen.

Da Oxidationsmittel (insbesondere Sauerstoff) beim Durchlauf durch den beschriebenen Prozess zur oxidativen Behandlung von Filtrationsrückständen verbraucht wird, ist es sinnvoll, dem vom Abgasauslass 130 zum Reaktionsbereich 24, insbesondere zum Oxidationsmitteleinlass 36 zurückgeführten Fluid wieder in dem Maße Oxidationsmittel zuzugeben, wie das Oxidationsmittel beim Durchlauf durch den Prozess verbraucht worden ist. Dazu kann in der Abgasrückführleitung 150, beispielsweise zwischen Abgasauslass 130 und Oxidationsmitteleinlass 36, ein Sensor 142 vorgesehen sein, der die Abreicherung an Oxidationsmittel im den Abgasauslass 130 verlassenden Fluidstrom gegenüber der gewünschten Konzentration von Oxidationsmittel im am Oxidationsmitteleinlass 36 in den Behälter 32 einströmenden Oxidationsmittelstrom bestimmt. Weiterhin kann eine Vorrichtung 144 zum Zuführen von Oxidationsmittel in den rückgeführten Fluidstrom nach Maßgabe der durch den Sensor 142 bestimmten Abreicherung an Oxidationsmittel vorgesehen sein.

**In** dem in Figur 2 gezeigten Beispiel ist der Sensor 142 am Oxidationsmitteleingang 36 angeordnet und erfasst die tatsächliche Konzentration von Oxidationsmittel im Oxidationsmittelstrom beim Eintritt in den Behälter 32 bzw. in den Agglomerat-Auffangbereich 33 des Reaktionsbereichs 24. Die Vorrichtung 144 zur Zuführung von Oxidationsmittel in den rückgeführten Fluidstrom mündet in die Abgasrückführleitung 150 an einer Stelle stromaufwärts des Sensors 142 und ist so geregelt, dass die am Sensor 142 erfasste Oxidationsmittelkonzentration auf einem vorbestimmten Wert bzw. innerhalb eines vorgegebenen Bereichs um diesen vorgegebenen Wert bleibt.

Die Menge an in dem Prozess geführtem Fluid lässt sich beispielsweise mit Hilfe einer Überwachung des Fluiddrucks im rückgeführten Fluidstrom konstant halten. Beispielsweise lässt sich dies mit Hilfe einer Erfassung und Steuerung bzw. Regelung des Drucks am Abgasauslass 136, am Oxidationsmitteleinlass 36 oder in der Abgasrückführleitung 150 realisieren. Wie in Figur 2 angedeutet ist, kann hierzu beispielsweise ein Überdruckventil 146 in der Abgasrückführleitung 150 angeordnet sein. Mit Hilfe des Überdruckventils lässt sich ein vorbestimmter Druck in der Abgasrückführleitung 150 einstellen und damit letztendlich der Massenfluss an fluider Phase (d.h. die Summe aus Oxidationsmittel und anderen Fluiden wie Förderfluid, Spülfuid, Wärmeübertragungsfluid) im Kreislauf konstant halten.

Mit einer Anordnung der beschriebene Art lässt sich auf einfache Weise sowohl der Massenfluss von im Kreislauf geführten Fluid steuern bzw. regeln wie auch die Konzentration von Oxidationsmittel in diesem Kreislauf. Damit kann man die Stärke der bei der Behandlung von Filterrückständen ablaufenden Oxidationsreaktionen sehr elegant in einem geschlossenen Regelkreislauf steuern bzw. regeln und so einstellen, dass eine genügend effiziente Oxidierung von brennbarem Material erreicht wird bei nicht zu starker Erzeugung von Reaktionswärme.

Ausführungsformen der vorliegenden Erfindung sind in den nachfolgenden nummerierten Absätzen nochmals dargelegt:
1. Verfahren zur Trockenfiltration eines Fremdkörper mitführenden Gasstroms, insbesondere in einer Filtervorrichtung zum Abreinigen von bei additiven Fertigungstechnologien entstehendem Abgas, aufweisend:
   Leiten eines Fremdkörper enthaltenden Rohgasstroms (44) in einen Rohgasraum (15) einer Filtereinheit (12), die wenigstens eine eine Rohgasseite von einer Reingasseite trennende Filteroberfläche aufweist,
   Zuführen von Oxidationsmittel zu einem Reaktionsbereich (24), der auf der Rohgasseite der Filteroberfläche stromabwärts von der Filteroberfläche liegt;
   derart, dass in von der Filteroberfläche abgereinigtem Material und/oder dem Rohgasstrom enthaltene Fremdkörper im Reaktionsbereich (24) mit dem Oxidationsmittel zur Bildung von oxidhaltigen Fremdkörpern reagieren.
2. Verfahren nach Absatz 1, wobei bei der Reaktion von von der Filteroberfläche abgereinigtem Material mit dem Oxidationsmittel nicht verbrauchtes Oxidationsmittel aus dem Reaktionsbereich (24) entfernt wird.
3. Verfahren nach Absatz 1 oder 2, wobei Oxidationsmittel in den Reaktionsbereich (24) über einen Oxidationsmitteleinlass (36) zugeführt wird und über einen Oxidationsmittelauslass (40, 39) abgeführt wird.
4. Verfahren nach Absatz 3, wobei der Oxidationsmittelauslass (40, 39) von dem Oxidationsmitteleinlass (36) verschieden ist.
5. Verfahren nach Absatz 3 oder 4, wobei nicht verbrauchtes Oxidationsmittel durch denselben Oxidationsmittelauslass (39) abgeführt wird wie bei der Reaktion entstandene oxidhaltige Fremdkörper und ggf. noch nicht umgesetzte Fremdkörper.
6. Verfahren nach einem Absatz 5, wobei der Reaktionsbereich (24) stromabwärts des Oxidationsmittelauslasses (39) liegende Bereiche umfasst, insbesondere stromabwärts liegende Leitungen (60), Fördereinrichtungen (80) und/oder Behälter (64).
7. Verfahren nach einem der Absätze 3 bis 6, wobei der Oxidationsmittelauslass (39) an eine pneumatische Fördereinrichtung (80) angeschlossen ist, insbesondere an eine als Feststoffinjektor oder Strahlpumpe arbeitende Fördereinrichtung.
8. Verfahren nach einem der Absätze 1 bis 7, wobei bei der Reaktion entstandene oxidhaltige Fremdkörper und ggf. noch nicht umgesetzte Fremdkörper über eine pneumatische Fördereinrichtung (80), insbesondere an eine als Feststoffinjektor oder Strahlpumpe arbeitende Fördereinrichtung, abgeführt werden.
9. Verfahren nach einem der Absätze 1 bis 8, wobei der Reaktionsbereich (24) mit Unterdruck beaufschlagt wird.
10. Verfahren nach Absatz 9, wobei das Beaufschlagen des Reaktionsbereichs (24) mit Unterdruck während der und/oder im Anschluss an die Reaktion von von der Filteroberfläche abgereinigtem Material mit dem Oxidationsmittel erfolgt.
11. Verfahren nach einem der Absätze 2 bis 10, wobei bei Reaktion von von der Filteroberfläche abgereinigtem Material mit dem Oxidationsmittel nicht verbrauchtes Oxidationsmittel aus dem Reaktionsbereich (24) abgesaugt wird, insbesondere durch die in Anspruch 7 oder 8 genannte pneumatische Fördereinrichtung.
12. Verfahren nach einem der Absätze 1 bis 11, wobei der Reaktionsbereich (24) mit einem inerten Fluid, insbesondere mit Inertgas, beaufschlagt wird.
13. Verfahren nach Absatz 12, wobei die Reaktion von von der Filteroberfläche abgereinigtem Material mit dem Oxidationsmittel in Reaktionsphasen verläuft und im Anschluss an eine jeweilige Reaktionsphase der Reaktionsbereich mit inertem Fluid ohne Zugabe von Oxidationsmittel beaufschlagt wird.
14. Verfahren nach Absatz 12 oder 13, wobei inertes Fluid über einen von dem Oxidationsmitteleinlass (36) verschiedenen weiteren Fluideinlass (38) in den Reaktionsbereich geleitet wird.
15. Verfahren nach einem der Absätze 3 bis 14, wobei inertes Fluid und/oder Oxidationsmittel durch einen neben dem Oxidationsmittelauslass (39) vorgesehenen weiteren Auslass (40) aus dem Reaktionsbereich abgeführt wird.
16. Verfahren nach einem der Absätze 1 bis 15, wobei der Reaktionsbereich (24) von einem Wärmeübertragungsfluid zum Abtransport von bei der Reaktion von von der Filteroberfläche abgereinigtem Material mit dem Oxidationsmittel entstehender Wärme durchströmt wird.
17. Verfahren nach einem der Absätze 1 bis 16, wobei der Reaktionsbereich (24) einen Agglomerat-Auffangbereich (33) enthält, der zur Aufnahme von von der Filteroberfläche abgereinigtem Material ausgebildet ist, wobei an der Filteroberfläche angelagerte Fremdkörper oder fremdkörperhaltige Agglomerate abgereinigt werden und in dem Agglomerat-Auffangbereich (33) aufgefangen und vorgehalten werden.
18. Verfahren nach Absatz 17, wobei dem Agglomerat-Auffangbereich (33) eine ein erstes Absperrorgan (30) aufweisende erste Verschlusseinrichtung zugeordnet ist, welche derart ausgebildet ist, dass sie Auffangen von von der Filteroberfläche bei einer Abreinigung herabfallendem Material im Agglomerat-Auffangbereich (33) ermöglicht und nach Aufnahme des abgereinigten Materials im Agglomerat-Auffangbereich (33) den Reaktionsbereich (24) gegenüber dem Rohgasraum (15) jedenfalls so lange absperrt, bis die Konzentration von Oxidationsmittel im Reaktionsbereich (24) und/oder im Agglomerat-Auffangbereich (33) in ausreichendem Maß abgefallen ist.
19. Verfahren nach Absatz 17 oder 18, wobei von der Filteroberfläche abgereinigtes Material vom Agglomerat-Auffangbereich (33) in einen nachgelagerten Austragbereich (62) gefördert wird, wobei insbesondere der Austragbereich (62) wenigstens einen Teil des Reaktionsbereichs (24) umfasst; und
   insbesondere Oxidationsmittel dem Agglomerat-Auffangbereich (33) und/oder dem Austragbereich (62) zugeführt wird.
20. Verfahren nach Absatz 19, wobei der Austragbereich (62) eine zweite Verschlusseinrichtung (66) aufweist, wobei insbesondere der Reaktionsbereich (24) zwischen der ersten Verschlusseinrichtung und der zweiten Verschlusseinrichtung liegt; und/oder wobei der Austragbereich (62) einen Sammelbehälter (64) für festkörperhaltiges Material umfasst.
21. Verfahren nach einem der Absätze 1 bis 20, wobei im Reaktionsbereich (24) nicht verbrauchtes Oxidationsmittel und ggf. weiteres Fluid, welches nach Verlassen des Reaktionsbereichs (24) als überschüssiges Fluid anfällt, ganz oder zum Teil in den Reaktionsbereich (24) zurückgeführt wird.
22. Verfahren nach Absatz 21, wobei eine Steuerung/Regelung vorgesehen ist, die derart eingerichtet ist, dass ein Fluiddruck innerhalb des Reaktionsbereichs (24) einen vorbestimmten oberen Grenzwert nicht überschreitet oder innerhalb eines vorbestimmten Druckbereichs bleibt.
23. Filtervorrichtung (10) zur Reinigung von Fremdkörper mitführendem Rohgas, aufweisend:
   wenigstens ein Filterelement (14) mit wenigstens einer eine Rohgasseite von einer Reingasseite trennenden Filteroberfläche in einem Rohgasraum, dem ein Fremdkörper enthaltender Rohgasstrom (15) zuführbar ist;
   eine Oxidationsmittelzuführeinrichtung (36), die dazu ausgebildet ist, ein Oxidationsmittel zu einem Reaktionsbereich (24) zu führen, der auf der Rohgasseite der Filteroberfläche stromabwärts von der Filteroberfläche liegt;
   derart, dass in von der Filteroberfläche abgereinigtem Material und/oder dem Rohgasstrom (15) enthaltene Fremdkörper im Reaktionsbereich (24) mit dem Oxidationsmittel zur Bildung von oxidhaltigen Fremdkörpern reagieren.
24. Filtervorrichtung (10) nach Absatz 23, wobei bei der Reaktion von von der Filteroberfläche abgereinigtem Material mit dem Oxidationsmittel nicht verbrauchtes Oxidationsmittel aus dem Reaktionsbereich (24) entfernbar ist.
25. Filtervorrichtung (10) nach Absatz 23 oder 24, aufweisend einen Oxidationsmitteleinlass (26), welcher dazu ausgebildet ist, Oxidationsmittel in den Reaktionsbereich (24) zuzuführen, und einen Oxidationsmittelauslass (40, 39), welcher dazu ausgebildet ist, Oxidationsmittel aus dem Reaktionsbereich (24) abzuführen, wobei insbesondere der Oxidationsmittelauslass (40, 39) von dem Oxidationsmitteleinlass (36) verschieden ist.
26. Filtervorrichtung (10) nach Absatz 25, welche dazu ausgebildet ist, nicht verbrauchtes Oxidationsmittel durch denselben Oxidationsmittelauslass (39) abzuführen, insbesondere abzusaugen, wie bei der Reaktion entstandene oxidhaltige Fremdkörper und ggf. noch nicht umgesetzte Fremdkörper.
27. Filtervorrichtung (10) nach Absatz 25 oder 26, wobei der Reaktionsbereich (24) stromabwärts des Oxidationsmittelauslasses (39) liegende Bereiche umfasst, insbesondere stromabwärts liegende Leitungen (60), Fördereinrichtungen (80) und/oder Behälter (64).
28. Filtervorrichtung (10) nach einem der Absätze 25 bis 27, wobei der Oxidationsmittelauslass (39) an eine pneumatische Fördereinrichtung (80) angeschlossen ist, insbesondere an eine als Feststoffinjektor oder Strahlpumpe arbeitende Fördereinrichtung.
29. Filtervorrichtung (10) nach einem der Absätze 23 bis 28, ferner aufweisend eine pneumatische Fördereinrichtung (80), insbesondere an eine als Feststoffinjektor oder Strahlpumpe arbeitende Fördereinrichtung, zum Abführen von bei der Reaktion entstandenen oxidhaltigen Fremdkörpern und ggf. noch nicht umgesetzten Fremdkörpern.
30. Filtervorrichtung (10) nach einem der Absätze 23 bis 29, welche dazu ausgebildet ist, den Reaktionsbereich (24) mit Unterdruck zu beaufschlagen, insbesondere während der und/oder im Anschluss an die Reaktion von von der Filteroberfläche abgereinigtem Material mit dem Oxidationsmittel.
31. Filtervorrichtung (10) nach einem der Absätze 23 bis 30, welche dazu ausgebildet ist, den Reaktionsbereich (24) mit einem inerten Fluid, insbesondere mit Inertgas, zu beaufschlagen.
32. Filtervorrichtung (10) nach Absatz 31, aufweisend eine Steuerung (59), welche derart eingerichtet ist, dass die Reaktion von von der Filteroberfläche abgereinigtem Material mit dem Oxidationsmittel in Reaktionsphasen stattfindet, wobei eine Beaufschlagung des Reaktionsbereichs (24) mit inertem Fluid ohne Zugabe von Oxidationsmittel im Anschluss an eine jeweilige Reaktionsphase vorgesehen ist.
33. Filtervorrichtung (10) nach Absatz 31 oder 32, ferner aufweisend einen von dem Oxidationsmitteleinlass (36) verschiedenen weiteren Fluideinlass (38) in den Reaktionsbereich (24) zur Einleitung von inertem Fluid und/oder Wärmeübertragungsfluid.
34. Filtervorrichtung (10) nach einem der Absätze 25 bis 33, ferner aufweisend einen neben dem Oxidationsmittelauslass (39) vorgesehenen weiteren Auslass (40) zum Abführen von inertem Fluid und/oder Oxidationsmittel.
35. Filtervorrichtung (10) nach einem der Absätze 23 bis 34, wobei der Reaktionsbereich (24) einen Agglomerat-Auffangbereich (33) enthält, der zur Aufnahme von von der Filteroberfläche abgereinigtem Material ausgebildet ist, wobei an der Filteroberfläche angelagerte Fremdkörper oder fremdkörperhaltige Agglomerate nach Abreinigung derselben in dem Agglomerat-Auffangbereich (33) auffangbar und vorhaltbar sind.
36. Filtervorrichtung (10) nach Absatz 35, wobei dem Agglomerat-Auffangbereich (33) eine ein erstes Absperrorgan (30) aufweisende erste Verschlusseinrichtung zugeordnet ist, welche derart ausgebildet ist, dass sie Auffangen von von der Filteroberfläche bei einer Abreinigung herabfallendem Material im Agglomerat-Auffangbereich (33) ermöglicht und nach Aufnahme des abgereinigten Materials im Agglomerat-Auffangbereich (33) den Reaktionsbereich (24) gegenüber dem Rohgasraum (15) jedenfalls so lange absperrt, bis die Konzentration von Oxidationsmittel im Reaktionsbereich (24) in ausreichendem Maß abgefallen ist.
37. Filtervorrichtung (109 nach Absatz 35 oder 36, weiterhin aufweisend einen dem Agglomerat-Auffangbereich (33) nachgelagerten Austragbereich (62), in den von der Filteroberfläche abgereinigtes Material förderbar ist, wobei insbesondere der Austragbereich (62) wenigstens einen Teil des Reaktionsbereichs (24) umfasst, und
   insbesondere Oxidationsmittel dem Agglomerat-Auffangbereich (33) und/oder dem Austragbereich (62) zuführbar ist.
38. Filtervorrichtung (10) nach Absatz 37, wobei der Austragbereich (62) eine zweite Verschlusseinrichtung aufweist, wobei insbesondere der Reaktionsbereich (24) zwischen der ersten Verschlusseinrichtung und der zweiten Verschlusseinrichtung liegt.
39. Filtervorrichtung (10) nach Absatz 37 oder 38, wobei der Austragbereich (62) einen Sammelbehälter (64) zum Abscheiden von festkörperhaltigem Material umfasst, wobei der Sammelbehälter (63) einen Auslass für fluides, insbesondere gasförmiges Material, aufweist, wobei insbesondere dem Auslass eine Filtereinheit (122) zur Reinigung des fluiden Materials von Fremdkörpern zugeordnet ist.
40. Filtervorrichtung (10) nach einem der Absätze 23 bis 39, ferner aufweisen eine Fluidrückführung (150), welche derart ausgebildet ist, dass im Reaktionsbereich (24) nicht verbrauchtes Oxidationsmittel und ggf. weiteres Fluid, welches nach Verlassen des Reaktionsbereichs (24) als überschüssiges Fluid anfällt, ganz oder zum Teil in den Reaktionsbereich (24) zurückgeführt wird, wobei insbesondere eine Steuerung/Regelung vorgesehen ist, die derart eingerichtet ist, dass ein Fluiddruck innerhalb des Reaktionsbereichs (24) einen vorbestimmten Wert nicht überschreitet oder innerhalb eines vorbestimmten Bereichs bleibt.

## Patentansprüche

1. Verfahren zur Trockenfiltration eines Fremdkörper mitführenden Gasstroms, insbesondere in einer Filtervorrichtung zum Abreinigen von bei additiven Fertigungstechnologien entstehendem Abgas, aufweisend:
Leiten eines Fremdkörper enthaltenden Rohgasstroms (44) in einen Rohgasraum (15) einer Filtereinheit (12), die wenigstens eine eine Rohgasseite von einer Reingasseite trennende Filteroberfläche aufweist,
Zuführen von Oxidationsmittel zu einem Reaktionsbereich (24), der auf der Rohgasseite der Filteroberfläche stromabwärts von der Filteroberfläche liegt, derart, dass in von der Filteroberfläche abgereinigtem Material und/oder dem Rohgasstrom enthaltene Fremdkörper im Reaktionsbereich (24) mit dem Oxidationsmittel zur Bildung von oxidhaltigen Fremdkörpern reagieren;
wobei der Reaktionsbereich (24) dem Rohgasraum (15) bezogen auf den Transport von Fremdkörpern, die sich an der Filteroberfläche angelagert haben und von der Filteroberfläche bei einem Abreinigungszyklus abgereinigt worden sind, nachgelagert ist;
**dadurch gekennzeichnet, dass** der Reaktionsbereich (24) mit Unterdruck beaufschlagt wird.

2. Verfahren nach Anspruch 1, wobei bei der Reaktion von von der Filteroberfläche abgereinigtem Material mit dem Oxidationsmittel nicht verbrauchtes Oxidationsmittel aus dem Reaktionsbereich (24) entfernt wird, und/oder wobei Oxidationsmittel in den Reaktionsbereich (24) über einen Oxidationsmitteleinlass (36) zugeführt wird und über einen Oxidationsmittelauslass (40, 39) abgeführt wird, wobei insbesondere der Oxidationsmittelauslass (40, 39) von dem Oxidationsmitteleinlass (36) verschieden ist, und/oder wobei nicht verbrauchtes Oxidationsmittel durch denselben Oxidationsmittelauslass (39) abgeführt wird wie bei der Reaktion entstandene oxidhaltige Fremdkörper und ggf. noch nicht umgesetzte Fremdkörper.

3. Verfahren nach einem Anspruch 2, wobei der Reaktionsbereich (24) stromabwärts des Oxidationsmittelauslasses (39) liegende Bereiche umfasst, insbesondere stromabwärts liegende Leitungen (60), Fördereinrichtungen (80) und/oder Behälter (64), wobei insbesondere der Oxidationsmittelauslass (39) an die pneumatische Fördereinrichtung (80) angeschlossen ist.

4. Verfahren nach einem der Ansprüche 1 bis 3, wobei insbesondere das Beaufschlagen des Reaktionsbereichs (24) mit Unterdruck während der und/oder im Anschluss an die Reaktion von von der Filteroberfläche abgereinigtem Material mit dem Oxidationsmittel erfolgt, und/oder wobei bei Reaktion von von der Filteroberfläche abgereinigtem Material mit dem Oxidationsmittel nicht verbrauchtes Oxidationsmittel aus dem Reaktionsbereich (24) abgesaugt wird, insbesondere durch die pneumatische Fördereinrichtung (80).

5. Verfahren nach einem der Ansprüche 1 bis 4, wobei der Reaktionsbereich (24) mit einem inerten Fluid, insbesondere mit Inertgas, beaufschlagt wird, wobei insbesondere die Reaktion von von der Filteroberfläche abgereinigtem Material mit dem Oxidationsmittel in Reaktionsphasen verläuft und im Anschluss an eine jeweilige Reaktionsphase der Reaktionsbereich mit inertem Fluid ohne Zugabe von Oxidationsmittel beaufschlagt wird, wobei ferner insbesondere inertes Fluid über einen von dem Oxidationsmitteleinlass (36) verschiedenen weiteren Fluideinlass (38) in den Reaktionsbereich geleitet wird, und/oder wobei inertes Fluid und/oder Oxidationsmittel durch einen neben dem Oxidationsmittelauslass (39) vorgesehenen weiteren Auslass (40) aus dem Reaktionsbereich abgeführt wird.

6. Verfahren nach einem der Ansprüche 1 bis 5, wobei der Reaktionsbereich (24) von einem Wärmeübertragungsfluid zum Abtransport von bei der Reaktion von von der Filteroberfläche abgereinigtem Material mit dem Oxidationsmittel entstehender Wärme durchströmt wird.

7. Verfahren nach einem der Ansprüche 1 bis 6, wobei der Reaktionsbereich (24) einen Agglomerat-Auffangbereich (33) enthält, der zur Aufnahme von von der Filteroberfläche abgereinigtem Material ausgebildet ist, wobei an der Filteroberfläche angelagerte Fremdkörper oder fremdkörperhaltige Agglomerate abgereinigt werden und in dem Agglomerat-Auffangbereich (33) aufgefangen und vorgehalten werden, wobei insbesondere dem Agglomerat-Auffangbereich (33) eine ein erstes Absperrorgan (30) aufweisende erste Verschlusseinrichtung zugeordnet ist, welche derart ausgebildet ist, dass sie Auffangen von von der Filteroberfläche bei einer Abreinigung herabfallendem Material im Agglomerat-Auffangbereich (33) ermöglicht und nach Aufnahme des abgereinigten Materials im Agglomerat-Auffangbereich (33) den Reaktionsbereich (24) gegenüber dem Rohgasraum (15) jedenfalls so lange absperrt, bis die Konzentration von Oxidationsmittel im Reaktionsbereich (24) und/oder im Agglomerat-Auffangbereich (33) in ausreichendem Maß abgefallen ist.

8. Verfahren nach Anspruch 7, wobei von der Filteroberfläche abgereinigtes Material vom Agglomerat-Auffangbereich (33) in einen nachgelagerten Austragbereich (62) gefördert wird, wobei insbesondere der Austragbereich (62) wenigstens einen Teil des Reaktionsbereichs (24) umfasst; und insbesondere Oxidationsmittel dem Agglomerat-Auffangbereich (33) und/oder dem Austragbereich (62) zugeführt wird, wobei insbesondere der Austragbereich (62) eine zweite Verschlusseinrichtung (66) aufweist, wobei insbesondere der Reaktionsbereich (24) zwischen der ersten Verschlusseinrichtung und der zweiten Verschlusseinrichtung liegt; und/oder wobei der Austragbereich (62) einen Sammelbehälter (64) für festkörperhaltiges Material umfasst.

9. Verfahren nach einem der Ansprüche 1 bis 8, wobei im Reaktionsbereich (24) nicht verbrauchtes Oxidationsmittel und ggf. weiteres Fluid, welches nach Verlassen des Reaktionsbereichs (24) als überschüssiges Fluid anfällt, ganz oder zum Teil in den Reaktionsbereich (24) zurückgeführt wird, wobei insbesondere eine Steuerung/Regelung vorgesehen ist, die derart eingerichtet ist, dass ein Fluiddruck innerhalb des Reaktionsbereichs (24) einen vorbestimmten oberen Grenzwert nicht überschreitet oder innerhalb eines vorbestimmten Druckbereichs bleibt; und/oder wobei bei der Reaktion entstandene oxidhaltige Fremdkörper und ggf. noch nicht umgesetzte Fremdkörper über eine als Feststoffinjektor oder Strahlpumpe arbeitende Fördereinrichtung abgeführt werden.

10. Filtervorrichtung (10) zur Reinigung von Fremdkörper mitführendem Rohgas, aufweisend:
wenigstens ein Filterelement (14) mit wenigstens einer eine Rohgasseite von einer Reingasseite trennenden Filteroberfläche in einem Rohgasraum, dem ein Fremdkörper enthaltender Rohgasstrom (15) zuführbar ist;
eine Oxidationsmittelzuführeinrichtung (36), die dazu ausgebildet ist, ein Oxidationsmittel zu einem Reaktionsbereich (24) zu führen, der auf der Rohgasseite der Filteroberfläche stromabwärts von der Filteroberfläche liegt, derart, dass in von der Filteroberfläche abgereinigtem Material und/oder dem Rohgasstrom (15) enthaltene Fremdkörper im Reaktionsbereich (24) mit dem Oxidationsmittel zur Bildung von oxidhaltigen Fremdkörpern reagieren;
wobei der Reaktionsbereich (24) dem Rohgasraum (15) bezogen auf den Transport von Fremdkörpern, die sich an der Filteroberfläche angelagert haben und von der Filteroberfläche bei einem Abreinigungszyklus abgereinigt worden sind, nachgelagert ist;
**dadurch gekennzeichnet, dass** die Filtervorrichtung (10) dazu ausgebildet ist, den Reaktionsbereich (24) mit Unterdruck zu beaufschlagen.

11. Filtervorrichtung (10) nach Anspruch10, wobei bei der Reaktion von von der Filteroberfläche abgereinigtem Material mit dem Oxidationsmittel nicht verbrauchtes Oxidationsmittel aus dem Reaktionsbereich (24) entfernbar ist; und/oder aufweisend einen Oxidationsmitteleinlass (26), welcher dazu ausgebildet ist, Oxidationsmittel in den Reaktionsbereich (24) zuzuführen, und einen Oxidationsmittelauslass (40, 39), welcher dazu ausgebildet ist, Oxidationsmittel aus dem Reaktionsbereich (24) abzuführen, wobei insbesondere der Oxidationsmittelauslass (40, 39) von dem Oxidationsmitteleinlass (36) verschieden ist, wobei insbesondere die Filtervorrichtung (10) dazu ausgebildet ist, nicht verbrauchtes Oxidationsmittel durch denselben Oxidationsmittelauslass (39) abzuführen, insbesondere abzusaugen, wie bei der Reaktion entstandene oxidhaltige Fremdkörper und ggf. noch nicht umgesetzte Fremdkörper.

12. Filtervorrichtung (10) nach Anspruch 11, wobei der Reaktionsbereich (24) stromabwärts des Oxidationsmittelauslasses (39) liegende Bereiche umfasst, insbesondere stromabwärts liegende Leitungen (60), Fördereinrichtungen (80) und/oder Behälter (64);wobei insbesondere der Oxidationsmittelauslass (39) an die pneumatische Fördereinrichtung (80) angeschlossen ist.

13. Filtervorrichtung (10) nach einem der Ansprüche 10 bis 12, welche dazu ausgebildet ist, den Reaktionsbereich (24) während der und/oder im Anschluss an die Reaktion von von der Filteroberfläche abgereinigtem Material mit dem Oxidationsmittel mit Unterdruck zu beaufschlagen; und/oder wobei die Filtervorrichtung (10) dazu ausgebildet ist, den Reaktionsbereich (24) mit einem inerten Fluid, insbesondere mit Inertgas, zu beaufschlagen; wobei die Filterrichtung (10) insbesondere eine Steuerung (59) aufweist, welche derart eingerichtet ist, dass die Reaktion von von der Filteroberfläche abgereinigtem Material mit dem Oxidationsmittel in Reaktionsphasen stattfindet, wobei eine Beaufschlagung des Reaktionsbereichs (24) mit inertem Fluid ohne Zugabe von Oxidationsmittel im Anschluss an eine jeweilige Reaktionsphase vorgesehen ist;, und/oder ferner mindestens eines der folgenden Merkmale aufweist: einen von dem Oxidationsmitteleinlass (36) verschiedenen weiteren Fluideinlass (38) in den Reaktionsbereich (24) zur Einleitung von inertem Fluid und/oder Wärmeübertragungsfluid, und einen neben dem Oxidationsmittelauslass (39) vorgesehenen weiteren Auslass (40) zum Abführen von inertem Fluid und/oder Oxidationsmittel.

14. Filtervorrichtung (10) nach einem der Ansprüche 10 bis 13, wobei der Reaktionsbereich (24) einen Agglomerat-Auffangbereich (33) enthält, der zur Aufnahme von von der Filteroberfläche abgereinigtem Material ausgebildet ist, wobei an der Filteroberfläche angelagerte Fremdkörper oder fremdkörperhaltige Agglomerate nach Abreinigung derselben in dem Agglomerat-Auffangbereich (33) auffangbar und vorhaltbar sind, wobei insbesondere dem Agglomerat-Auffangbereich (33) eine ein erstes Absperrorgan (30) aufweisende erste Verschlusseinrichtung zugeordnet ist, welche derart ausgebildet ist, dass sie Auffangen von von der Filteroberfläche bei einer Abreinigung herabfallendem Material im Agglomerat-Auffangbereich (33) ermöglicht und nach Aufnahme des abgereinigten Materials im Agglomerat-Auffangbereich (33) den Reaktionsbereich (24) gegenüber dem Rohgasraum (15) jedenfalls so lange absperrt, bis die Konzentration von Oxidationsmittel im Reaktionsbereich (24) in ausreichendem Maß abgefallen ist, welche weiterhin insbesondere einen dem Agglomerat-Auffangbereich (33) nachgelagerten Austragbereich (62) aufweist, in den von der Filteroberfläche abgereinigtes Material förderbar ist, wobei insbesondere der Austragbereich (62) wenigstens einen Teil des Reaktionsbereichs (24) umfasst, undinsbesondere Oxidationsmittel dem Agglomerat-Auffangbereich (33) und/oder dem Austragbereich (62) zuführbar ist, wobei ferner insbesondere der Austragbereich (62) eine zweite Verschlusseinrichtung aufweist, wobei insbesondere der Reaktionsbereich (24) zwischen der ersten Verschlusseinrichtung und der zweiten Verschlusseinrichtung liegt, und/oder wobei der Austragbereich (62) einen Sammelbehälter (64) zum Abscheiden von festkörperhaltigem Material umfasst, wobei der Sammelbehälter (63) einen Auslass für fluides, insbesondere gasförmiges Material, aufweist, wobei insbesondere dem Auslass eine Filtereinheit (122) zur Reinigung des fluiden Materials von Fremdkörpern zugeordnet ist.

15. Filtervorrichtung (10) nach einem der Ansprüche 10 bis 14, ferner aufweisend eine Fluidrückführung (150), welche derart ausgebildet ist, dass im Reaktionsbereich (24) nicht verbrauchtes Oxidationsmittel und ggf. weiteres Fluid, welches nach Verlassen des Reaktionsbereichs (24) als überschüssiges Fluid anfällt, ganz oder zum Teil in den Reaktionsbereich (24) zurückgeführt wird, wobei insbesondere eine Steuerung/Regelung vorgesehen ist, die derart eingerichtet ist, dass ein Fluiddruck innerhalb des Reaktionsbereichs (24) einen vorbestimmten Wert nicht überschreitet oder innerhalb eines vorbestimmten Bereichs bleibt; und/oder ferner aufweisend eine als Feststoffinjektor oder Strahlpumpe arbeitende Fördereinrichtung zum Abführen von bei der Reaktion entstandenen oxidhaltigen Fremdkörpern und ggf. noch nicht umgesetzten Fremdkörpern.
